# EUROPEAN PATENT SPECIFICATION

(11) **EP 2 975 558 B1**
(45) Date of publication and mention of the grant of the patent: **20.11.2019**
(21) Application number: 15166138.6
(22) Date of filing: 01.05.2015
(51) Int. Cl.: G06N 3/063, G06N 3/04

(54) **INTERFACING APPARATUS AND USER INPUT PROCESSING METHOD**
SCHNITTSTELLENBILDUNGSVORRICHTUNG UND EINGABEVERARBEITUNGSVERFAHREN
APPAREIL D'INTERFAÇAGE ET PROCÉDÉ DE TRAITEMENT D'ENTRÉE D'UTILISATEUR

(30) Priority: 14.07.2014 KR 20140088553; 04.08.2014 KR 20140099937
(43) Date of publication of application: 20.01.2016
(73) Proprietor: Samsung Electronics Co., Ltd., Gyeonggi-do 443-742 (KR)
(72) Inventor: Lee, Jun Haeng, 443-803 Gyeonggi-do (KR); Kim, Junseok, 443-803 Gyeonggi-do (KR); Shin, Changwoo, Gyeonggi-do (KR); Ryu, EricHyunsurk, Gyeonggi-do (KR)
(74) Representative: Grootscholten, Johannes A.M.

(56) References cited:
- US-A1- 2013 031 039
- US-B1- 6 253 161
- PATRICK LICHTSTEINER ET AL: "A 128128 120 dB 15 s Latency Asynchronous Temporal Contrast Vision Sensor", IEEE JOURNAL OF SOLID-STATE CIRCUITS, IEEE SERVICE CENTER, PISCATAWAY, NJ, USA, vol. 43, no. 2, 1 February 2008 (2008-02-01), pages 566-576, XP011200748, ISSN: 0018-9200, DOI: 10.1109/JSSC.2007.914337
- K.A. BOAHEN: "Point-to-point connectivity between neuromorphic chips using address events", IEEE TRANSACTIONS ON CIRCUITS AND SYSTEMS II: ANALOG AND DIGITALSIGNAL PROCESSING, vol. 47, no. 5, 1 May 2000 (2000-05-01), pages 416-434, XP055253076, 345 EAST 47 STREET, NEW YORK, N.Y. 10017, USA ISSN: 1057-7130, DOI: 10.1109/82.842110
- EMERY R ET AL: "Connection-centric network for spiking neural networks", NETWORKS-ON-CHIP, 2009. NOCS 2009. 3RD ACM/IEEE INTERNATIONAL SYMPOSIUM ON, IEEE, PISCATAWAY, NJ, USA, 10 May 2009 (2009-05-10), pages 144-152, XP031472809, ISBN: 978-1-4244-4142-6
- SHIH-CHII LIU ET AL: "Neuromorphic sensory systems", CURRENT OPINION IN NEUROBIOLOGY, vol. 20, no. 3, 1 June 2010 (2010-06-01), pages 288-295, XP028281586, ISSN: 0959-4388, DOI: 10.1016/J.CONB.2010.03.007 [retrieved on 2010-03-29]

## Description

### 1. Field

The invention relates to an interfacing apparatus and a user input processing method, and more specifically, to apparatuses and methods that are capable of processing video and audio event sensors more efficiently.

### 2. Description of Related Art

Human-computer interaction (HCI) technology refers to a technology that increases an interaction between a user and a computer. A user input may be transmitted to a computer using various user interfaces, for example, to input data, a user may use a mouse, a keyboard, a touchscreen, and the like. Such a user interface may be implemented using a hardware component, a software component, and/or a combination thereof.

Because a camera, a microphone, and other components are widely utilized in electronic devices, a user interface (UI) may be used to increase an interaction between a user and a computer. Thus, various functions of the electronic devices may be more efficiently utilized.

In a related art, an interface acquires data from display and audio event sensors on a one by one basis. That is, information from one sensor is acquired individually in time. For instance, "A 128×128 120dB 15us Latency Asynchronous Temporal Contrast Vision Sensor", Patrick Lichtensteiner et al., IEEE Journal of Solid-State Circuits, vol. 43(2), pages 566-576 discloses an interface apparatus with a plurality of pixels, wherein each pixel independently and in continuous time quantizes local relative intensity changes to generate spike events. US 6 253 161 B1 (ARIAS-ESTRADA MIGUEL [MX]) 26 June 2001 (2001-06-26), discloses an interface apparatus with a plurality of self-signalling pixels, wherein the pixels are grouped into a plurality of bidimensionally arranged groups. The result is that a processing delay and a loss of information that occurs when multiple audio event items or multiple video events are generated simultaneously. As a result, the related art interface is not well equipped for higher-resolution interfaces such as that in a quarter video graphics array (QVGA) which may be used for smaller handheld devices which typically require higher efficient data and audio processing within a smaller display.

One or more embodiments may address at least the above problems and/or disadvantages and other disadvantages not described above.

All embodiments are defined in the appended claims.

The embodiments will become more apparent by describing certain embodiments with reference to the accompanying drawings, in which:
FIGS. 1, 2, 3A through 3E and 4A through 4F illustrate diagrams of an interfacing apparatus;
FIG. 5A through 5C illustrate operations of an interfacing apparatus;
FIGS. 6A through 6D illustrate operations of an interfacing apparatus;
FIGS. 7A and 7B illustrate operations of an interfacing apparatus;
FIGS. 8A through 8D illustrate examples of obtaining data of a group;
FIG. 9 illustrates an operation of an interfacing apparatus communicating with an external device;
FIGS. 10A through 10D, 11A, 11B and 12 illustrate examples of various packets used by an interfacing apparatus;
FIGS. 13 and 14 illustrate operations of an interfacing apparatus;
FIG. 15 illustrates information applied to an address bus and a data bus that may change over time; and
FIG. 16 illustrates a user input processing method;
FIG. 17 is a diagram illustrating an address bus and a data bus, such as that shown in the example of FIG. 10A, that are used to identify a group of elements in which an event occurs, according to an example.

Reference will now be made in detail to examples which are illustrated in the accompanying drawings, wherein like reference numerals refer to like elements throughout. The examples are described below in order to explain the present disclosure by referring to the figures.

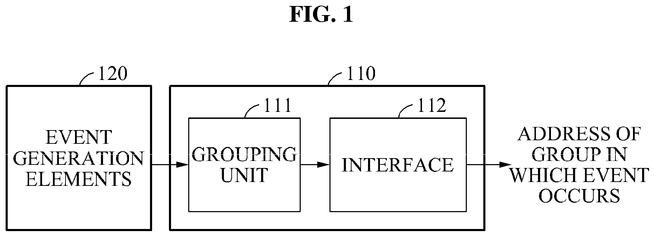

FIGS. 1 through 4F illustrate an interfacing apparatus 110.

Referring to FIG. 1, the interfacing apparatus 110 receives signals that are output from event generation elements 120. The event generation elements 120 refer to elements that output event signals that may be based on a sensed video or audio event that occurs. As an example, the event generation elements 120 may generate an event signal asynchronously in response to an occurrence of an event. Hereinafter, an event generation element may also be more simply referred to as an element.

For example, the various products using the event-based sensors may be included in or otherwise be applicable to smart phones, smart home appliances, wearable devices, desktop computers, laptop computers, tablet computers, kiosks, and the like, which may perform one or more of motion recognition, face recognition, voice recognition, user authentication, and the like, using an event-based vision sensor, an event-based auditory sensor, an event-based processing device, and the like.

As a non-limiting example, the event generation elements 120 may be implemented using event-based vision sensors. An event-based vision sensor may output an event signal, for example, that is time-asynchronously in response to the sensing of a light changing event. For example, the event-based vision sensor may sense a brightness of light increasing event or a brightness of light decreasing event. As another example, the event-based vision sensor may sense a color of a light changing event. A frame based vision sensor may scan an output of a photodiode of each pixel in a plurality of frame units such as dynamic-vision-sensor (DVS) pixels, whereas the event-based vision sensor may output an event signal of a pixel in which a change of light is sensed.

As another example, the event generation elements 120 may be implemented using event-based auditory sensors. An event-based auditory sensor may output an event signal time-asynchronously in response to sensing a sound or audio changing event. For example, the event-based auditory sensor may sense an amplitude of a sound increasing event or an amplitude of a sound decreasing event. As another example, the event-based auditory sensor may sense a frequency of a sound increasing event or a frequency of a sound decreasing event.

In some examples, a sensor for sensing audio events such as a change in volume and a sensor for sensing video events such as a change in the display may different from each other. According to various aspects, the grouping unit 111 may group just audio events together, video events together, and the like, such that only the respective type of events are processed simultaneously.

According to one or more embodiments, the grouping unit groups sensor event elements into groups instead of a single sensor event element. For example, the size, shape, and pattern of the groups of sensor elements can be predetermined. In some examples, the grouping unit 111 may be designed according to the predetermined size and pattern of the groups.

The event generation elements 120 may be implemented using event-based processing devices. As an example, an event-based processing device may be more simply referred to as a processor. The event-based processing device may output a spike signal, for example, automatically or in response to receiving at least one input. The event-based processing device may perform signal processing and recognition, in response to an input of a sensor signal or an output signal of another neuron using a network that is configured by at least one neuron.

It should be appreciated that the implementation of the event generation elements 120 are provided for purposes of example and are not meant to be limited thereto. The event generation elements 120 may be modified in various forms to generate event signals time-asynchronously in response to the sensing of a predetermined event.

The event generation elements 120 may continuously output event signals, for example, until being reset. The event generation elements 120 may generate event signals time-asynchronously in response to the sensing of a predetermined event, and continuously output the generated event signals. As an example, the event generation elements 120 may be reset when a reset signal is received from an external device. In response, the event generation elements 120 may suspend outputting of the event signals in response to being reset.

The operations of the event generation elements 120 may be described based on a state transition. For example, the event generation element 120 may be in one of a first state corresponding to an occurrence of an event, and a second state distinct from the first state. The event generation element 120 may generate an event signal in the first state. In some examples, the event generation element 120 may be initialized to be in the second state, and transition to the first state in response to an occurrence of an event. For example, the event generation element 120 may transition to the second state in response to a reset signal.

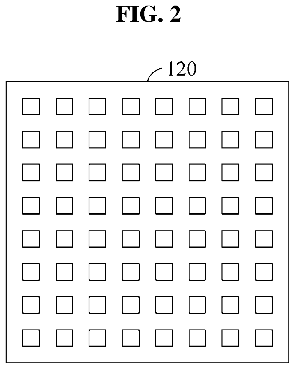

In the example of FIG. 1, the interfacing apparatus 110 includes a grouping unit 111, which may also be referred to as a grouper 111. The interfacing apparatus 100 also includes an interface 112. The grouping unit 111 may generate a group event signal in which a plurality of event generation elements 120 are grouped rather than generating a group event signal such as the relate art in which only a single event generation element is identified. According to one or more examples, the event generation elements 120 may be disposed in the form of a matrix such as a square, a rectangle, a successive line of elements, and the like, but the sizes, patterns, and shapes, are unlimited and do not have to fit within a specific shape. That is, the event generation elements 120 may be grouped in various forms. For example, in FIG. 2, event generation elements are disposed consecutively in a predetermined pattern such as a column or a row may be grouped into the same group.

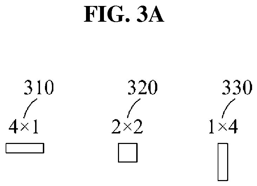

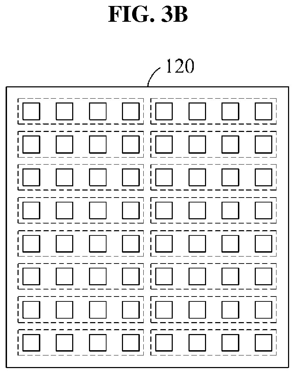

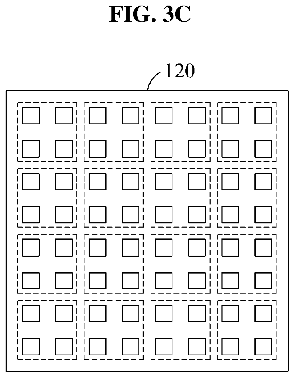

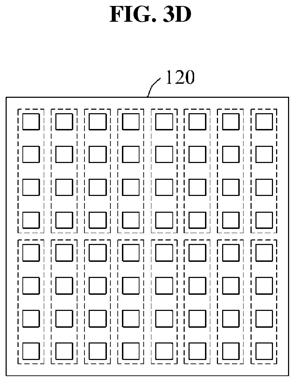

As a non-limiting example, the event generation elements 120 may be grouped in units of two, elements, three elements, four elements, more elements, or less elements. Referring to FIG. 3A, event generation elements may be grouped in various forms such as a 4 x 1 successive horizontal line form 310, a 2 x 2 square form 320, and a 1 x 4 successive vertical line form 330. Referring to FIG. 3B, the event generation elements 120 are grouped in a plurality of successive horizontal lines in a 4 x 1 form. Referring to FIG. 3C, the event generation elements 120 are grouped in a plurality of squares of a 2 x 2 form. Referring to FIGS. 3D, the event generation elements 120 are grouped in a plurality of successive vertical lines 1 x 4 form.

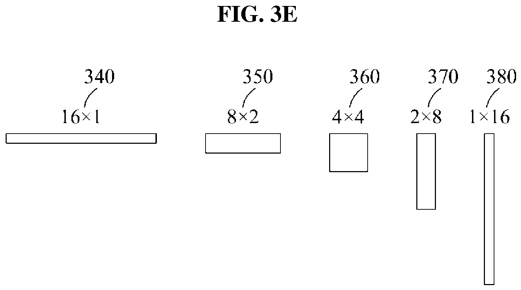

As another non-limiting example, the event generation elements 120 may be grouped in different size units such as groups of 4 elements, 8 elements, sixteen elements, and the like. In some examples, the size and the pattern of the groups may be predetermined. Also, in some examples, the grouping unit 111 may be determined according to a size and pattern of the groups. Referring to FIG. 3E, event generation elements may be grouped in a 16 x 1 form 340, an 8 x 2 form 350, a 4 x 4 form 360, a 2 x 8 form 370, and a 1 x 16 form 380. The descriptions of the forms in which the event generation elements are grouped are provided exemplarily. It should also be appreciated that the forms in which the event generation elements are grouped may be variously modified. It should also be appreciated that the size of the groups are not limited to 4 elements, 8 elements, sixteen elements, or the like, and may be grouped in any non-limiting example.

Referring again to FIG. 1, the grouping unit 111 may generate the group event signal in which the event generation elements 120 are grouped. When the event generation elements 120 are grouped, a plurality of groups may be formed. In this example, the grouping unit 111 may generate a group event signal corresponding to a group in which an event occurs, from among the plurality of groups. The group in which an event occurs refers to a group including at least one element where an event occurs, such as a visual event, an audio event, or a processing event. The element where the event occurs may generate an event signal in response to the sensing of an occurrence of an event. For example, an event-based vision sensor may sense a brightness of a light increasing event or a brightness of a light decreasing event. As another example, the event-based vision sensor may sense a color of a light changing event.

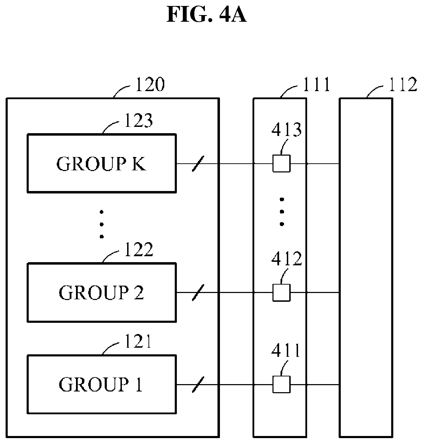

Referring to FIG. 4A, the event generation elements 120 are grouped in a first group 121, a second group 122, through a k-th group 123, respectively. In this example, the grouping unit 111 includes a first generator 411, a second generator 412, through a k-th generator 413. The first generator 411 may generate a group event signal when an event occurs in the first group 121. Likewise, the second generator 412 may generate a group event signal when an event occurs in the second group 122, and the k-th generator 413 may generate a group event signal when an event occurs in the k-th group 123.

The interface 112 may receive the group event signal that is generated by the grouping unit 111. The interface 112 may output an address of a group in which an event occurs based on the group event signal. For example, the address of the group may be an address representing event generation elements belonging to the group.

The interface 112 may output an address of a group in which an event occurs based on a generator from which a group event signal is received, from among the first generator 411 through the k-th generator 413. When a group event signal is received from the first generator 411, the interface 112 may output an address of the first group 121. When a group event signal is received from the k-th generator 413, the interface 112 may output an address of the k-th group 123.

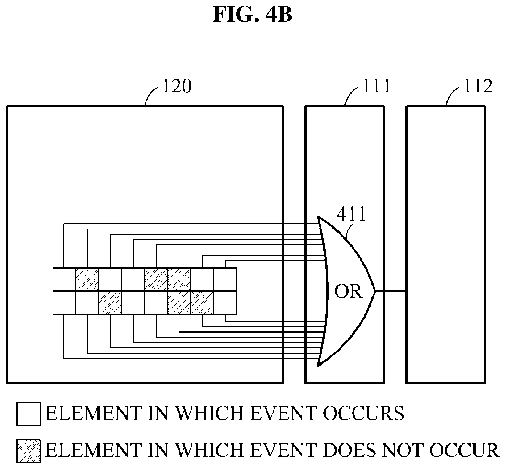

As a non-limiting example, the first generator 411, the second generator 412, ..., and the k-th generator 413 may be implemented using logic gates. Referring to FIG. 4B, the first generator 411 is an OR gate that is connected to elements of the first group 121. In this example, when an event signal is output from one of the elements of the first group 121, a group event signal may be generated by the first generator 411.

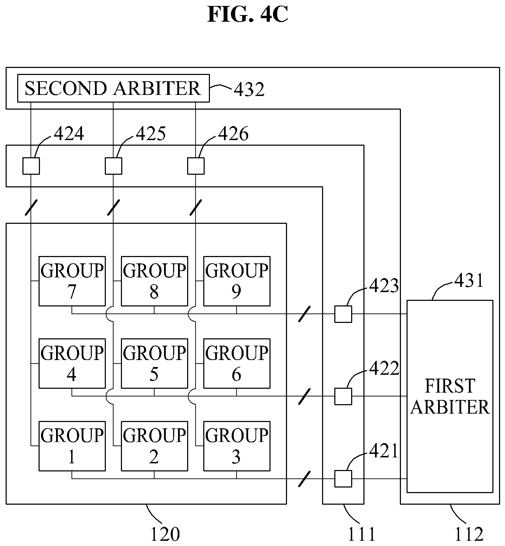

Referring to FIG. 4C, the grouping unit 111 is connected two-dimensionally to a plurality of groups. In this example, the grouping unit 111 includes a first generator 421, a second generator 422, a third generator 423, a fourth generator 424, a fifth generator 425, and a sixth generator 426.

In this example, the first generator 421 is connected to a first group, a second group, and a third group. When an event signal is output from any element of one of the first through third group, a group event signal may be generated by the first generator 421. The second generator 422 is connected to a fourth group, a fifth group, and a sixth group. When an event signal is output from an element of one of the fourth through the sixth groups, a group event signal may be generated by the second generator 422. Likewise, the third generator 423 is connected to a seventh group, an eighth group, and a ninth group. When an event signal is output from an element of one of the seventh through the ninth groups, a group event signal may be generated by the third generator 423.

From above, the fourth generator 424 is connected to the first group, the fourth group, and the seventh group. When an event signal is output from one element of any of the first group, the fourth group, or the seventh group, a group event signal may be generated by the fourth generator 424. The fifth generator 425 is connected to the second group, the fifth group, and the eighth group. When an event signal is output from one element of any of the second group, the fifth group, or the eighth group, a group event signal may be generated by the fifth generator 425. The sixth generator 426 is connected to the third group, the sixth group, and the ninth group. When an event signal is output from one element of any of the third group, the sixth group, or the ninth group, a group event signal may be generated by the sixth generator 426.

In this example, the interface 112 includes a first arbiter 431 and a second arbiter 432. The first arbiter 431 may receive the group event signals that are generated by one or more of the first generator 421, the second generator 422, and the third generator 423. Likewise, the second arbiter 432 may receive the group event signals that are generated by the fourth generator 424, the fifth generator 425, and the sixth generator 426. The first arbiter 431 may also be referred to as a line arbiter, and the second arbiter 432 may also be referred to as a group arbiter.

The first arbiter 431 may output a first address of a group in which an event occurs based on a generator from which a group event signal is received, from among the first generator 421, the second generator 422, and the third generator 423. In some examples, the first address may also be referred to as a line address. When a group event signal is received from the first generator 421, the first arbiter 431 may output an address indicating a row that is common to the first group, the second group, and the third group. Similarly, the first arbiter 431 may output an address indicating a row that is common to the fourth group, the fifth group, and the sixth group. When a group event signal is received from the third generator 423, the first arbiter 431 may output an address indicating a row that is common to the seventh group, the eighth group, the ninth group.

The second arbiter 432 may output a second address of a group in which an event occurs based on a generator from which a group event signal is received, from among the fourth generator 424, the fifth generator 425, and the sixth generator 426. In this example, the second address may be referred to as a group address. When a group event signal is received from the fourth generator 424, the second arbiter 432 may output an address indicating a column that is common to the first group, the fourth group, and the seventh group. Similarly, a group event signal may be received from the fifth generator 425, and the second arbiter 432 may output an address indicating a column that is common to the second group, the fifth group, and the eighth group. Also, a group event signal may be received from the sixth generator 426, and the second arbiter 432 may output an address indicating a column that is common to the third group, the sixth group, and the ninth group. One or more examples of operations of the first arbiter 431 and the second arbiter 432 are described further herein.

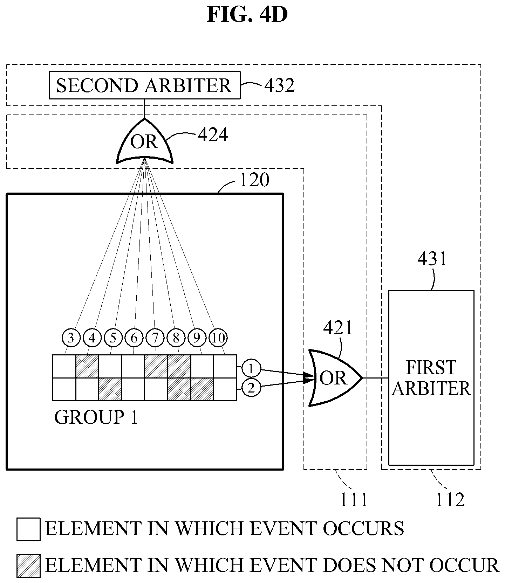

The first generator 421 through the sixth generator 426 may be implemented, for example, using logic gates. Referring to FIG. 4D, in this example, the first generator 421 is an OR gate that is connected to elements of the first group. In this example, the first group includes elements provided in a rectangular 8 x 2 form. Here, the first generator 421 is connected through a first row of the first group and a first line, and a second row of the first group and a second line. In this example, the fourth generator 424 is connected through a first column of the first group and what is represented by a third line, a second column of the first group and a fourth line, a third column of the first group and a fifth line, a fourth column of the first group and a sixth line, a fifth column of the first group and a seventh line, a sixth column of the first group and an eighth line, a seventh column of the first group and a ninth line, and an eighth column of the first group and a tenth line.

When an event signal is output from one of the elements included in the first row of the first group, for example, a signal corresponding to "TRUE" or "1" may be applied to the first line. Similarly when an event signal is output from any one of elements included in the second row of the first group, a signal corresponding to "TRUE" or "1" may be applied to the second line. As a non-limiting example, if a "TRUE" or "1" signal is applied to at least one of the first line and the second line, a group event signal may be generated by the first generator 421.

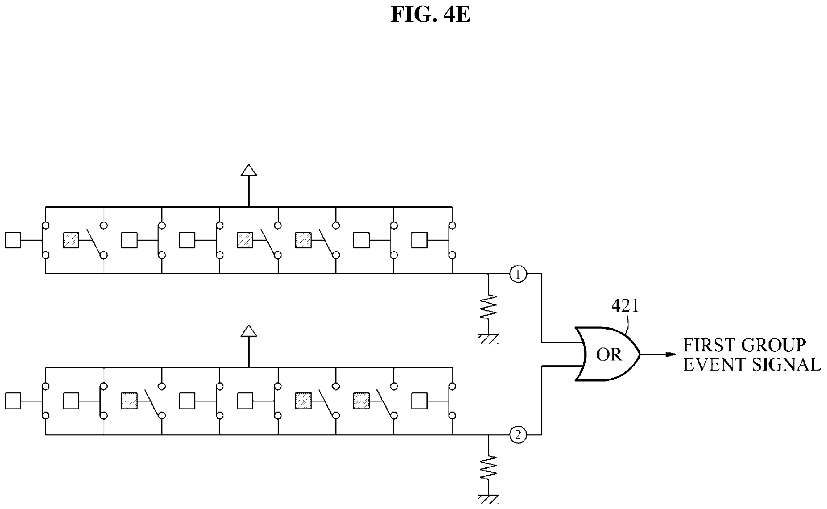

Referring to FIG. 4E, the first generator 421 is connected to the elements of the first row of the first group and the elements of the second row of the first group through circuits, for example, pull-down circuits, and the like. The elements may control their own respective switches. For example, an element in which an event occurs may turn a switch on, and an element in which an event does not occur may turn a switch off or keep or otherwise maintain a switch in the off state. Also, a plurality of switches may be connected to a single line.

When any one of the plurality of switches connected in the line is turned on, a supply voltage (VDD) may be applied to the line. In this example, a signal corresponding to "TRUE" or "1" may be applied to the line. Conversely, when all of the switches connected to the single line are turned off, a ground voltage (GND) may be applied to the line. In this example, a signal corresponding to "FALSE" or "0" may be applied to the line.

Referring to FIG. 4D again, when an event signal is output from one of the elements included in the first column of the first group, a signal corresponding to "TRUE" or "1" may be applied to the third line. As another example, when an event signal is output from one of the elements included in the second column of the first group, a signal corresponding to "TRUE" or "1" may be applied to the fourth line. When an event signal is output from one of the elements included in the third column of the first group, a signal corresponding to "TRUE" or "1" may be applied to the fifth line. When an event signal is output from one of the elements included in the fourth column of the first group, a signal corresponding to "TRUE" or "1" may be applied to the sixth line. When an event signal is output from any one of the elements included in the fifth column of the first group, a signal corresponding to "TRUE" or "1" may be applied to the seventh line. When an event signal is output from one of the elements included in the sixth column of the first group, a signal corresponding to "TRUE" or "1" may be applied to the eighth line. When an event signal is output from one of the elements included in the seventh column of the first group, a signal corresponding to "TRUE" or "1" may be applied to the ninth line. When an event signal is output from one of the elements included in the eighth column of the first group, a signal corresponding to "TRUE" or "1" may be applied to the tenth line. When a signal corresponding to "TRUE" or "1" is applied to at least one of the third line through tenth line, a group event signal may be generated by the fourth generator 424.

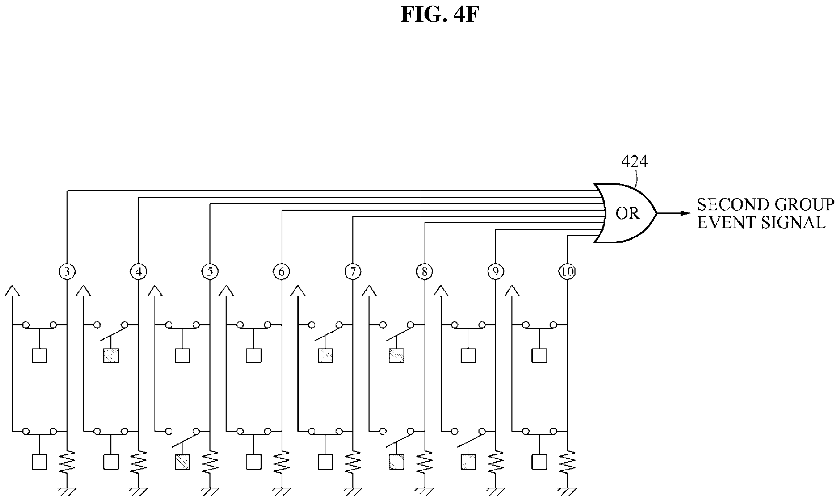

Referring to FIG. 4F, the second generator 424 is connected to the elements of the first through eighth columns of the first group through pull-down circuits. The elements may control their own respective switches. For example, an element in which an event occurs may turn a switch on, and an element in which an event does not occur may turn a switch off or otherwise maintain a switch in the off position. Also, a plurality of switches may be connected to a single line.

When one of the plurality of switches connected to the single line is turned on, a supply voltage (VDD voltage) may be applied to the line. In this example, a signal corresponding to "TRUE" or "1" may be applied to the line. Conversely, when all of the switches connected to the single line are turned off, a ground (GND) voltage may be applied to the line. In this example, it may be interpreted that a signal corresponding to "FALSE" or "0" is applied to the line.

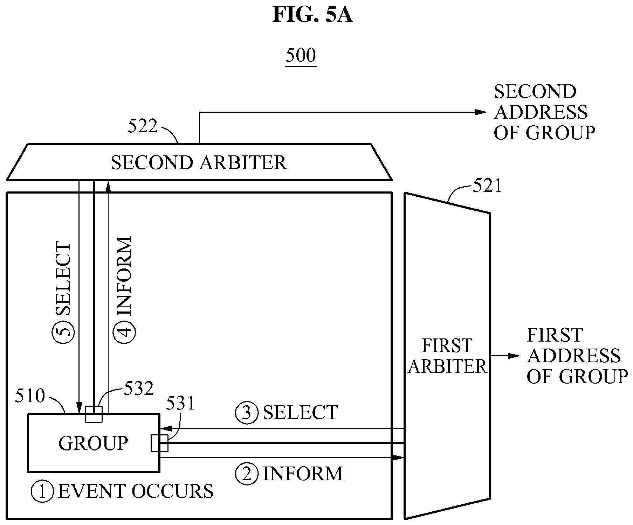

FIGS. 5A through 5C illustrate operations of an interfacing apparatus 500.

Referring to FIG. 5A, the interfacing apparatus 500 includes a first arbiter 521 and a second arbiter 522. The interfacing apparatus 500 further includes a grouping unit 531 for a first direction, and a grouping unit 532 for a second direction. As a non-limiting example, the first direction may be a horizontal direction, and the second direction may be a vertical direction. A configuration of the interfacing apparatus 500 may correspond to the example shown in FIG. 4C.

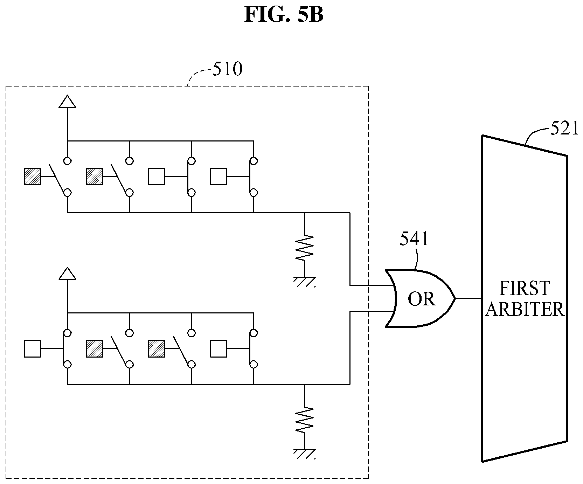

An occurrence of an event may be sensed by at least one of a plurality of elements included in group 510. For example, an element in which an event occurs in the group 510 may generate an event signal. The grouping unit 531 for the first direction of the group 510 may receive the event signal from the element in which an event occurs and generate a first group event signal corresponding to the group 510. The first group event signal may inform of an occurrence of an event in the group 510 in the first direction. Referring to FIG. 5B, elements in the group 510 are connected to an OR gate 541 through pull-down circuits. In this example, the OR gate 541 may generate a first group event signal.

The first arbiter 521 may receive the first group event signal. For example, the first arbiter 521 may select the first group event signal, and output a first address of the group 510 based on the selected first group event signal. In this example, the first address of the group 510 may be an address corresponding to a y-coordinate of the group 510.

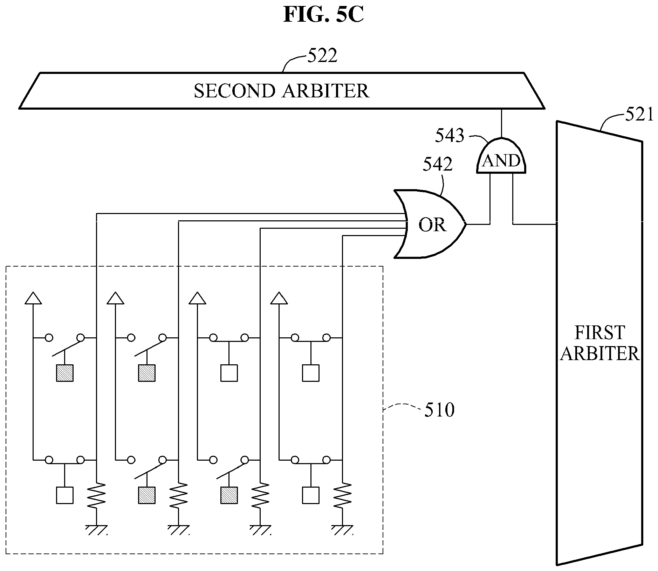

The grouping unit 532 for the second direction of the group 510 may receive the event signal from the element in which an event occurs in the group 510, and generate a second group event signal corresponding to the group 510. For example, the second group event signal may inform of an occurrence of an event in the group 510 in the second direction. Referring to FIG. 5C, elements in the group 510 are also connected to an OR gate 542 through pull-down circuits. In this example, the OR gate 542 may generate a second group event signal.

The second group event signal may be transmitted to the second arbiter 522 after a selection signal is received from the first arbiter 521. Referring to FIG. 5C, a second group event signal generated by the OR gate 542 and a selection signal generated by the first arbiter 521 may be transmitted to the second arbiter 522 through an AND gate 543 which outputs a signal correspondingly.

The second arbiter 522 may select the second group event signal, and output a second address of the group 510 based on the selected second group event signal. For example, the second address of the group 510 may be an address corresponding to an x-coordinate of the group 510.

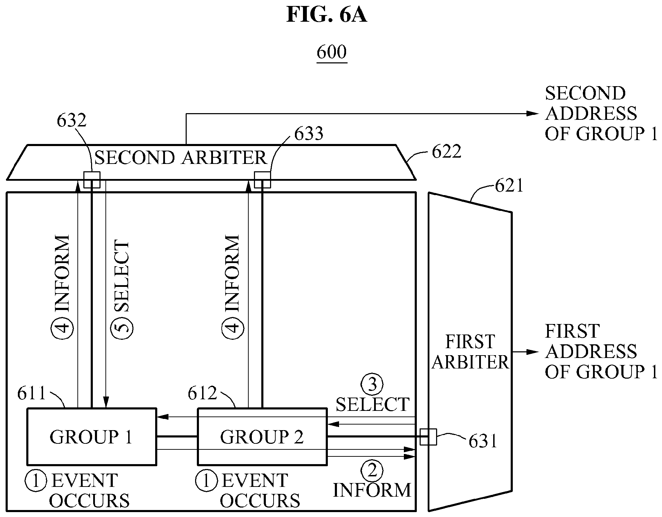

FIGS. 6A through 6D illustrate operations of an interfacing apparatus 600 according to other examples.

Referring to FIG. 6A, the interfacing apparatus 600 includes a first arbiter 621 and a second arbiter 622. In one or more examples, the interfacing apparatus 600 may further include a first grouping unit 631 for a first direction of a first group 611 and a first direction of a second group 612, a second grouping unit 632 for a second direction of the first group 611, and a third grouping unit 633 for a second direction of the second group 612. For example, the first directions may be horizontal directions, and the second directions may be vertical directions. A configuration of the interfacing apparatus 600 may be an example of apparatus as shown in FIG. 4C.

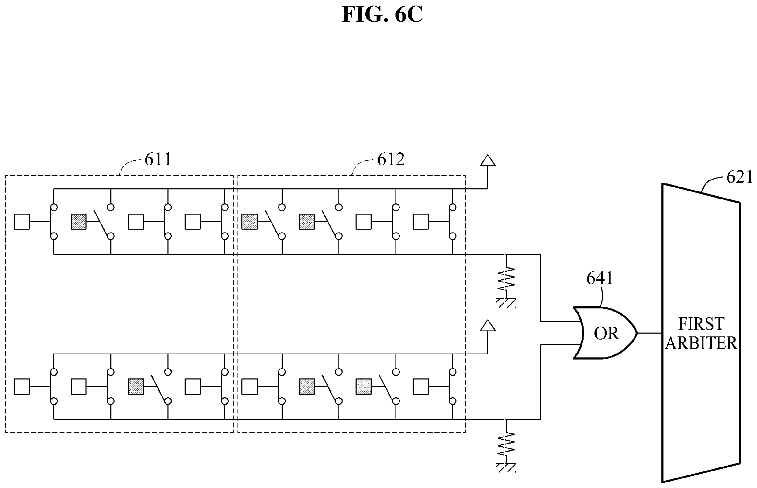

An occurrence of an event may be sensed in at least one element included in the first group 611 and at least one element included in the second group 612. In response, an element in which an event occurs in the first group 611 and an element in which an event occurs in the second group 612 may generate event signals. The first grouping unit 631 for the first direction of the first group 611 and the first direction of the second group 612 may receive the event signals from the element in which the event occurs in the first group 611 and the element in which the event occurs in the second group 612, and generate a first group event signal corresponding to the first group 611 and the second group 612. In this example, the first group event signal may be a signal informing that an event occurs in a row common to the first group 611 and the second group 612. Referring to FIG. 6C, elements in the first group 611 and elements in the second group 612 are connected to an OR gate 641 through pull-down circuits. The OR gate 641 may generate a first group event signal and output the signal to the first arbiter 621.

The first arbiter 621 may receive the first group event signal. The first arbiter 621 may select the first group event signal, and output a first address common to the first group 611 and the second group 612 based on the selected first group event signal. For example, the first address may be an address corresponding to a y-coordinate common to the first group 611 and the second group 612.

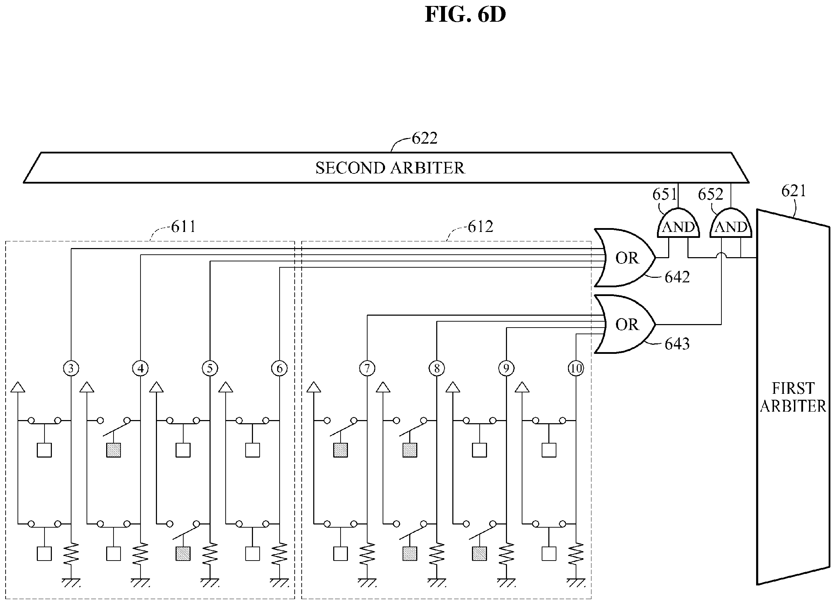

The second grouping unit 632 for the second direction of the first group 611 may receive the event signal from the element in which an event occurs in the first group 611, and generate a second group event signal corresponding to the first group 611. For example, the second group event signal may inform of an occurrence of an event in the first group 611 in the second direction. Referring to FIG. 6D, elements in the first group 611 are connected to an OR gate 642 through pull-down circuits. The OR gate 642 may generate a second group event signal.

The second group event signal may be transmitted to the second arbiter 622 after a selection signal is received from the first arbiter 621. Referring to FIG. 6D, for example, the second group event signal generated by the OR gate 642 and a selection signal generated by the first arbiter 621 may be transmitted to the second arbiter 622 through an AND gate 651.

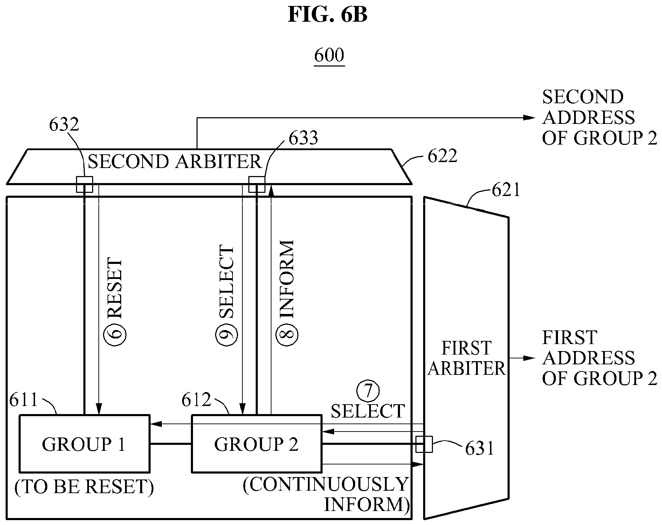

The third grouping unit 633 (shown in FIG. 6B) for the second direction of the second group 612 may receive the event signal from the element in which an event occurs in the second group 612, and generate a third group event signal corresponding to the second group 612. The third group event signal may inform of an occurrence of an event in the second group 612 in the second direction. Referring again to FIG. 6D, elements in the second group 612 are connected to an OR gate 643 through pull-down circuits. The OR gate 643 may generate a third group event signal.

The third group event signal may be transmitted to the second arbiter 622 after a selection signal is received from the first arbiter 621. Referring to FIG. 6D, in this example, the third group event signal generated by the OR gate 643 and a selection signal generated by the first arbiter 621 may be transmitted to the second arbiter 622 through an AND gate 652.

The second arbiter 622 may receive the second group event signal and the third group event signal. When a plurality of group event signals are received, the second arbiter 622 may select one of the group event signals. For example, the second arbiter 622 may select one of the group event signals at random. As another example, the second arbiter 622 may select a group event signal corresponding to a smallest x-coordinate from among the plurality of group event signals or an event signal corresponding to an x-coordinate that is above or below a threshold. The second arbiter 622 may select a group event signal corresponding to a greatest x-coordinate from among the plurality of group event signals. A method of selecting one of the group event signals by the second arbiter 622 may be variously modified. Hereinafter, a non-limiting example in which a second group event signal is selected by the second arbiter 622 is described.

The second arbiter 622 may select the second group event signal, and output a second address of the first group 611 based on the selected second group event signal. For example, the second address of the first group 611 may be an address corresponding to an x-coordinate of the first group 611.

Referring to back again to FIG. 6B, the second arbiter 622 may reset the first group 611. The second arbiter 622 may apply a reset signal to a plurality of elements included in the first group 611. The plurality of elements in the first group 611 may be reset in response to the reset signal.

An element in which an event occurs in the second group 612 may continuously output an event signal. For example, the first grouping unit 631 for the first direction of the second group 612 may receive the event signal from the element in which an event occurs in the second group 612, and generate a first group event signal corresponding to the second group 612. The first group event signal may inform of an occurrence of an event in the second group 612.

The first arbiter 621 may receive the first group event signal. In this example, the first arbiter 621 may select the first group event signal, and output a first address of the second group 612 based on the selected first group event signal. The first address of the second group 612 may be an address corresponding to a y-coordinate of the second group 612.

The third grouping unit 633 for the second direction of the second group 612 may receive the event signal from the element in which an event occurs in the second group 612, and generate a third group event signal corresponding to the second group 612. The third group event signal may then be transmitted to the second arbiter 622 after a selection signal is received from the first arbiter 621.

The second arbiter 622 may receive the third group event signal. The second arbiter 622 may select the third group event signal, and output a second address of the second group 612 based on the selected third group event signal. For example, the second address of the second group 612 may be an address corresponding to an x-coordinate of the second group 612.

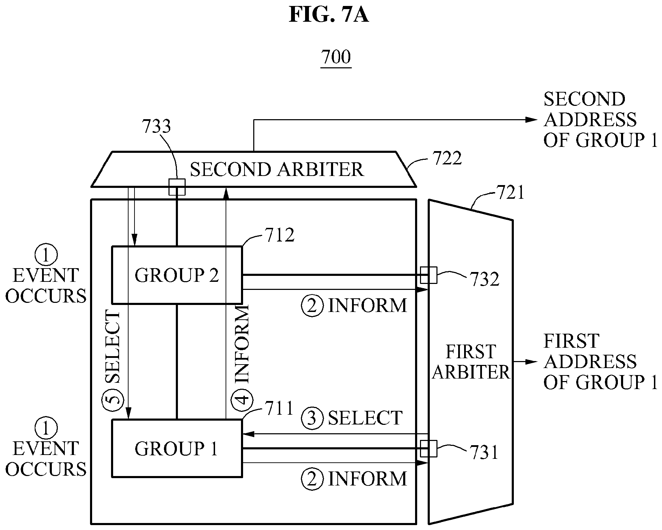

FIGS. 7A through 7B illustrate operations of an interfacing apparatus 700 according to other examples.

Referring to FIG. 7A, the interfacing apparatus 700 includes a first arbiter 721 and a second arbiter 722. The interfacing apparatus 700 further includes a first grouping unit 731 for a first direction of a first group 711, a second grouping unit 732 for a first direction of a second group 712, and a third grouping unit 733 for a second direction of the first group 711 and a second direction of the second group 712. For example, the first directions may be horizontal directions, and the second directions may be vertical directions. An example of the interfacing apparatus 700 may correspond to the apparatus as shown in FIG. 4C.

An occurrence of an event may be sensed in at least one element included in the first group 711 and at least one element included in the second group 712. In response, an element in which an event occurs in the first group 711 and an element in which an event occurs in the second group 712 may generate event signals. The first grouping unit 731 for the first direction of the first group 711 may receive the event signal from the element in which an event occurs in the first group 711, and generate a first group event signal corresponding to the first group 711. The second grouping unit 732 for the first direction of the second group 712 may receive the event signal from the element in which an event occurs in the second group 712, and generate a second group event signal corresponding to the second group 712. In this example, the first group event signal may be a signal used to inform of an occurrence of an event in the first group 711, and the second group event signal may be a signal used to inform of an occurrence of an event in the second group 712. Elements in the first group 711 and elements in the second group 712 are connected to an OR gate through pull-down circuits, as shown in FIG. 5B.

The first arbiter 721 may receive the first group event signal and the second group event signal. According to one or more embodiments, when a plurality of group event signals are received, the first arbiter 721 may select one of the group event signals. For example, the first arbiter 721 may select one of the group event signals at random. As a non-limiting example, the first arbiter 721 may select a group event signal corresponding to a smallest x-coordinate from among the plurality of group event signals. As another example, the first arbiter 721 may select a group event signal corresponding to a greatest x-coordinate from among the plurality of group event signals. It should also be appreciated that a method of selecting one of the group event signals by the first arbiter 721 may be variously modified. Hereinafter, an example in which a first group event signal is selected by the first arbiter 721 is described.

The first arbiter 721 may select the first group event signal, and output a first address of the first group 711 based on the selected first group event signal. For example, the first address of the first group 711 may be an address corresponding to a y-coordinate of the first group 711.

The third grouping unit 733 that is used for the second direction of the first group 711 may receive the event signal from the element in which an event occurs in the first group 711, and generate a third group event signal corresponding to the first group 711. The third group event signal may be a signal informing of an occurrence of an event in the first group 711 in the second direction. For example, elements in the first group 711 may be connected to an OR gate through pull-down circuits, as shown in FIG. 5C. The third group event signal may be transmitted to the second arbiter 722 after a selection signal is received from the first arbiter 721.

The second arbiter 722 may select the third group event signal, and output a second address of the first group 711, for example, based on the selected third group event signal. In some cases, the second address of the first group 711 may be an address corresponding to an x-coordinate of the first group 711.

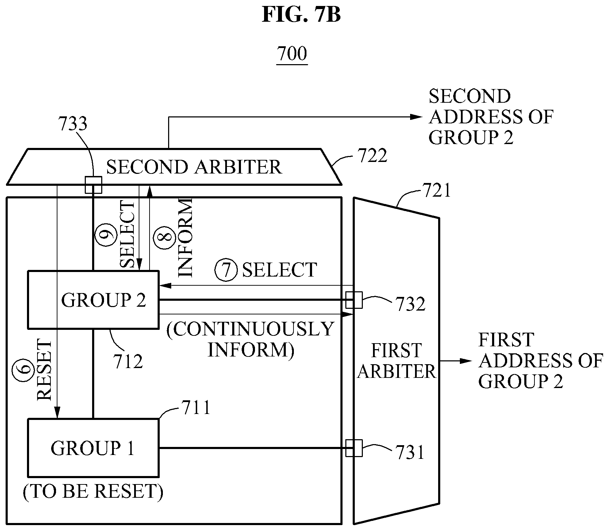

Referring to FIG. 7B, the second arbiter 722 may reset the first group 711. The second arbiter 722 may apply a reset signal to a plurality of elements that are included in the first group 711. The plurality of elements in the first group 711 may be reset in response to the reset signal. For example, the plurality of elements in the first group 711 may be reset in response to the reset signal of the second arbiter 722 and a selection signal of the first arbiter 721.

As an example, an element in which an event occurs in the second group 712 may continuously output an event signal. The second grouping unit 732 for the first direction of the second group 712 may receive the event signal from the element in which an event occurs in the second group 712, and generate a second group event signal corresponding to the second group 712. For example, the second group event signal may be a signal informing of an occurrence of an event in the second group 712.

The first arbiter 721 may receive the second group event signal. The first arbiter 721 may select the second group event signal, and output a first address of the second group 712 based on the selected second group event signal. For example, the first address of the second group 712 may be an address corresponding to a y-coordinate of the second group 712.

The third grouping unit 733 for the second direction of the second group 712 may receive the event signal from the element in which an event occurs in the second group 712, and generate a third group event signal corresponding to the second group 712. In response, the third group event signal may be transmitted to the second arbiter 722 after a selection signal is received from the first arbiter 721.

The second arbiter 722 may receive the third group event signal. The second arbiter 722 may select the third group event signal, and output a second address of the second group 712 based on the selected third group event signal. For example, the second address of the second group 712 may be an address corresponding to an x-coordinate of the second group 712.

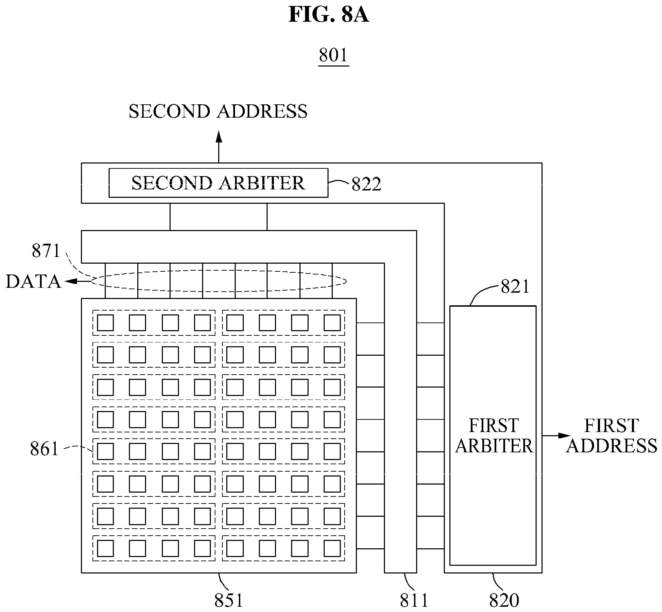

FIGS. 8A through 8D illustrate examples of obtaining data of a group.

Referring to FIG. 8A, an interfacing apparatus 801 includes a grouping unit 811 and an interface 820. Event generation elements 851 may be grouped in a row direction. In this example, the event generation elements 851 are grouped in groups of a 4 x 1 horizontal lines in successive form.

The grouping unit 811 may generate a first group event signal by grouping first event signals of the event generation elements 851, and generate a second group event signal by grouping second event signals of the event generation elements 851. For example, the first event signals may be event signals output from the event generation elements 851 in a first direction, and the second event signals are event signals output from the event generation elements 851 in a second direction. Here the first direction is a row direction, and the second direction is a column direction.

The interface 820 includes a first arbiter 821 in a vertical direction and a second arbiter 822 in a horizontal direction. The first arbiter 821 may select one of at least one first group event signal in response to the at least one first group event signal. The first arbiter 821 may output a first address corresponding to the selected first group event signal. The second arbiter 822 may select a second group event signal in response to at least one second group event signal. The second arbiter 822 may output a second address corresponding to the selected second group event signal.

The interfacing apparatus 801 further includes a data output unit 871. For example, the data output unit 871 may output data of a group corresponding to the first address and the second address. The data output unit 871 may output the data of the group corresponding to the first address and the second address based on the second event signals that are output from the event generation elements 851 in the second direction.

For example, an event may occur in group 861. The first arbiter 821 may select the group 861, and output a first address of the group 861. The second arbiter 822 may select the group 861, and output a second address of the group 861. In this example, the data output unit 871 may output second event signals of the group 861 as data about the group 861 corresponding to the selected first and second addresses.

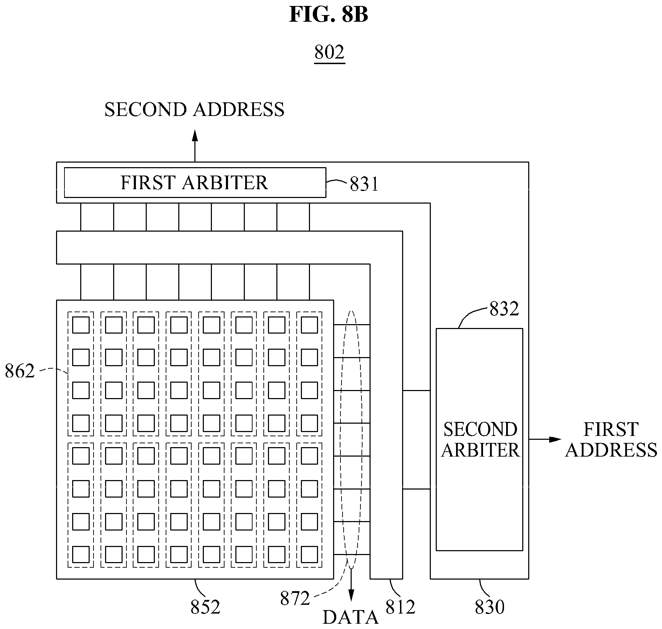

Referring to FIG. 8B, an interfacing apparatus 802 includes a grouping unit 812 and an interface 830. Event generation elements 852 may be grouped in a column direction. The event generation elements 852 may be grouped, for example, in a 1 x 4 form.

The grouping unit 812 may generate a first group event signal by grouping first event signals of the event generation elements 852, and generate a second group event signal by grouping of second event signals of the event generation elements 852. In this example, the first event signals may be event signals that are output from the event generation elements 852 in a first direction, and the second event signals may be event signals that are output from the event generation elements 852 in a second direction. Here, the first direction may be a row direction, and the second direction may be a column direction.

The interface 830 includes a first arbiter 831 and a second arbiter 832. The first arbiter 831 may select at least one second group event signal in response to the at least one second group event signal. The second arbiter 831 may output a second address corresponding to the selected second group event signal. The second arbiter 832 may select at least one first group event signal in response to the at least one first group event signal. The second arbiter 832 may output a first address corresponding to the selected first group event signal.

The interfacing apparatus 802 further includes a data output unit 872. The data output unit 872 may output data of a group corresponding to the first address and the second address. For example, the data output unit 872 may output the data of the group corresponding to the first address and the second address based on the first event signals output from the event generation elements 851 in the first direction.

For example, an event may occur in group 862. The first arbiter 831 may select the group 862, and output a second address of the group 862. The second arbiter 832 may select the group 862, and output a first address of the group 862. In this example, the data output unit 872 may output first event signals of the group 862 as data of the group 862 corresponding to the first address and the second address.

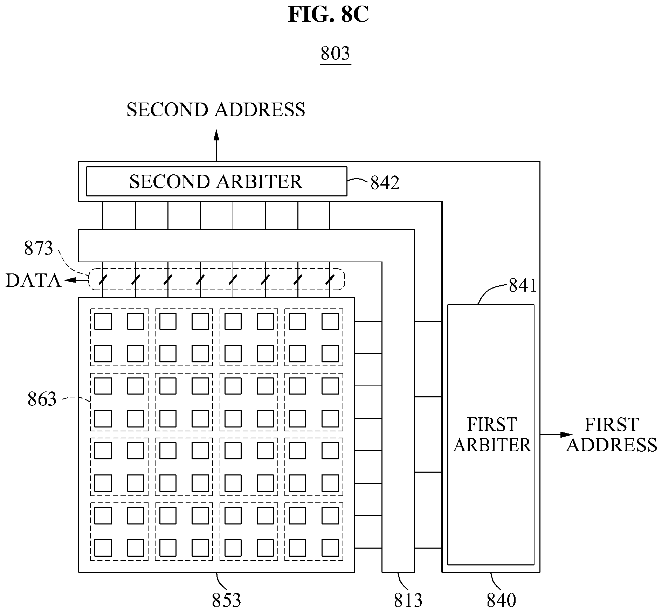

Referring to FIG. 8C, an interfacing apparatus 803 includes a grouping unit 813 and an interface 840. Event generation elements 853 may be grouped in the form of a two-dimensional (2D) matrix. The event generation elements 853 may be grouped in a 2 x 2 form. In these examples, the elements that are grouped together may be one-dimensional or two-dimensional groups of display sensors, audio sensors, processing sensors, and the like.

It should be appreciated that in one or more examples, a sensor for sensing an audio event and a sensor for sensing a video event may be different types of sensors, or otherwise configured differently. Therefore, in some examples, audio events can be simultaneously processed and the video events can be simultaneously processed, respectively.

The grouping unit 813 may generate a first group event signal by grouping first event signals of the event generation elements 853, and generate a second group event signal by grouping second event signals of the event generation elements 853. In these examples, the first event signals may be event signals output from the event generation elements 853 in a first direction, and the second event signals may be signals output from the event generation elements 853 in a second direction. As a non-limiting example, the first direction may be a row direction, and the second direction may be a column direction.

The interface 840 includes a first arbiter 841 and a second arbiter 842. The first arbiter 841 may select at least one first group event signal in response to the at least one first group event signal. In response, the first arbiter 841 may output a first address corresponding to the selected first group event signal. The second arbiter 842 may select at least one second group event signal in response to the at least one second group event signal. In response, the second arbiter 842 may output a second address corresponding to the selected second group event signal.

The interfacing apparatus 803 further includes a data output unit 873. For example, the data output unit 873 may output data of a group corresponding to the first address and the second address. As one non-limiting example, the data output unit 873 may output the data of the group corresponding to the first address and the second address based on the second event signals output from the event generation elements 851 in the second direction.

As an example, an event may occur in group 863. The first arbiter 841 may select the group 863, and output a first address of the group 863. The second arbiter 842 may select the group 863, and output a second address of the group 863. In this example, the data output unit 873 may output second event signals of the group 863 as data of the group 863 corresponding to the first address and the second address.

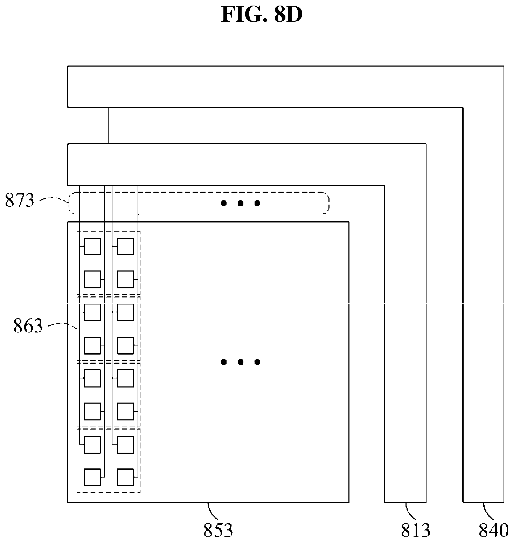

When the group 863 is selected by the first arbiter 841, the data output unit 873 may obtain output values of four elements included in the group 863. The data output unit 873 may be connected individually to all elements included in a single group among the plurality of groups. Examples of routing between the event generation elements 853 and the data output unit 873 may be the same as that shown in the example of FIG. 8D.

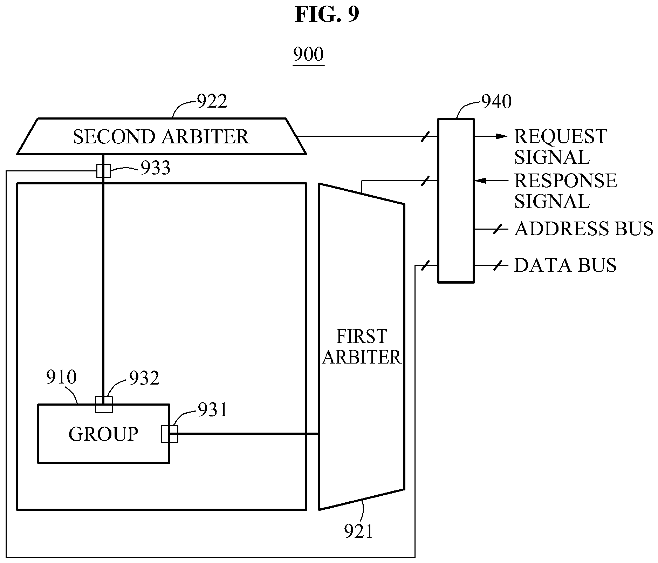

FIG. 9 illustrates an operation of an interfacing apparatus communicating with an external device.

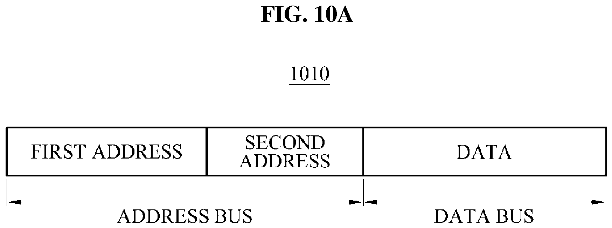

FIGS. 10A through 12 illustrate examples of various packets used by an interfacing apparatus.

Referring to FIG. 9, interfacing apparatus 900 includes a communication unit 940 that may communicate with an external device. When an event occurs in a group 910, a first group event signal may be generated by a first grouping unit 931, and a second group event signal may be generated by a second grouping unit 932. The first arbiter 921 may output a first address of the group 910, and a second arbiter 922 may output a second address of the group 910. A data output unit 933 may output data of the group 910.

The communication unit 940 may apply a first address and a second address of a group in which an event occurs to an address bus, and apply data of the group in which an event occurs to a data bus. Referring to FIG. 10A, the communication unit 940 may transmit a packet 1010 to an outside using the address bus and the data bus.

The communication unit 940 may further output timestamp information when applying the first address, the second address, and data of the group in which an event occurs to the address bus and the data bus. In this example, the packet 1010 may further include a timestamp field. The timestamp information refers to information about a time at which an event occurs. The communication unit 940 may further receive an output of a timer (not shown). The communication unit 940 may apply, to a timestamp bus (not shown), an output of the timer at a point in time at which an event occurs. As another example, the communication unit 940 may apply, to the timestamp bus, an output of the timer at a point in time at which the first address, the second address, and the data of the group in which an event occurs are applied to the address bus and the data bus.

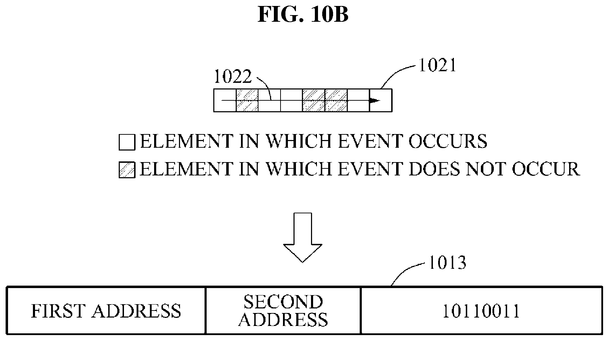

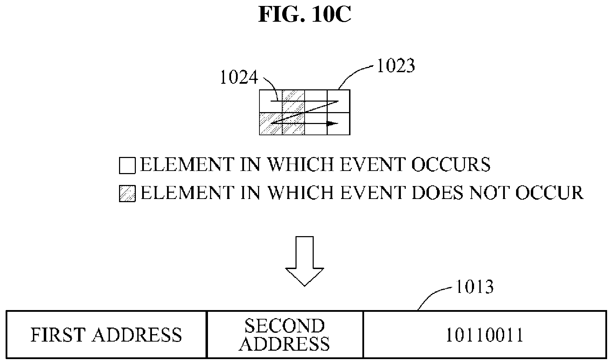

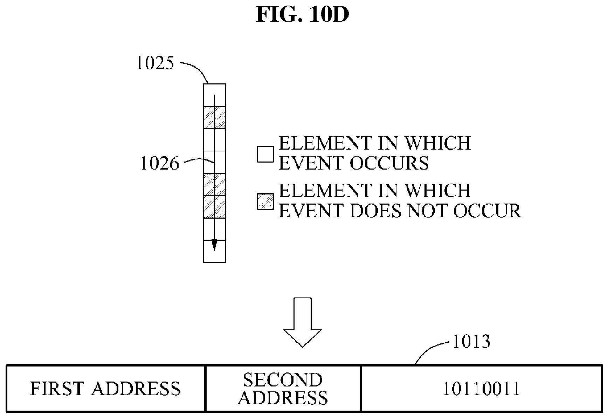

The communication unit 940 may perform mapping between event generation elements in a group in which an event occurs and a plurality of bits that make up a data field of the packet 1010. Referring to FIG. 10B, when event generation elements 1021 in a group are grouped in a row direction, the communication unit 940 may configure bits of a data field 1013 of a packet based on a sequence 1022 in which the event generation elements 1021 are disposed. Referring to FIG. 10C, for example, when event generation elements 1023 in a group are grouped in the form of a matrix, the communication unit 940 may configure the bits of the data field 1013 of the packet based on a sequence 1024 in which the event generation elements 1023 are disposed. Referring to FIG. 10D, when event generation elements 1025 in a group are grouped in a column direction, the communication unit 940 may configure the bits of the data field 1013 of the packet based on a sequence 1026 in which the event generation elements 1025 are disposed. It should be appreciated that the mapping between the event generation elements and the plurality of bits that make up the data field of the packet is not limited thereto, and may be variously modified.

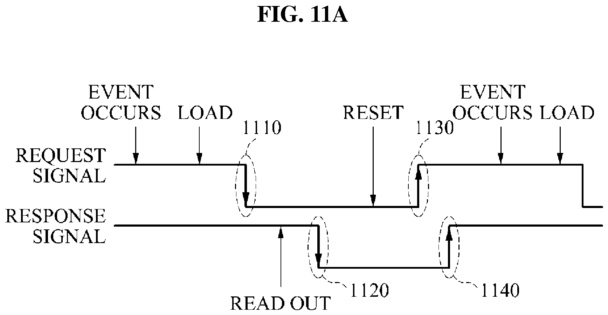

Referring to FIG. 11A, the communication unit 940 may communicate with an external device, for example, a using handshaking. The external device refers to a device that may receive an event signal from the interfacing apparatus 900, and may include, for example, a microprocessor, a hardware module configured to process an event signal, and the like.

When an address and data of a group in which an event occurs are loaded, the communication unit 940 may change a request signal from high to low. The external device communicating with the communication unit 940 may receive a falling edge 1110 of the request signal, and read out the address and the data. The external device may change a response signal from high to low when the address and the data are read out. In this example, the interfacing apparatus 900 may receive a falling edge 1120 of the response signal, and the rest the group of which the address and the data are transmitted. When the group is reset, the communication unit 940 may change the request signal from low to high. The external device may receive a rising edge 1130 of the request signal, and change the response signal from low to high. In this example, the interfacing apparatus 900 may receive a rising edge 1140 of the response signal, and iteratively perform the foregoing operation to transmit an address and data of a subsequent group in which an event occurs.

For example, the communication unit 940 may transmit a first address, a second address, and data of a group in which an event occurs to an external device using serial communication. The communication unit 940 may transmit bits included in the packet 1010 of FIG. 10A to the external device with a predetermined timing of the serial communication. A communication method of the communication unit 940 is not limited thereto, and may be variously modified. Hereinafter, for ease of description, a case in which a first address, a second address, and data of a group are transmitted through an address bus and a data bus is assumed.

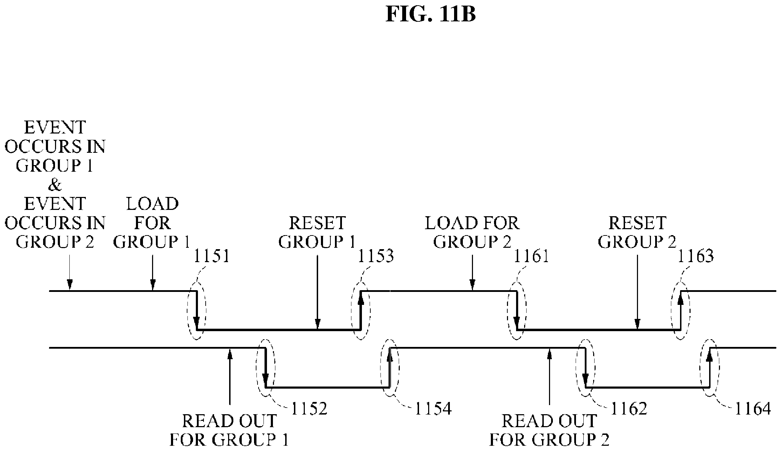

Referring to FIG. 11B, when events occur simultaneously in a plurality of groups, the communication unit 940 may iteratively communicate with an external device using handshaking. For example, when events occur simultaneously in a first group and a second group, one of the groups may be selected by an arbiter.

As an example, the first group may be selected first. When an address and data of the first group are loaded, the communication unit 940 may change a request signal from high to low. The external device communicating with the communication unit 940 may receive a falling edge 1151 of a request signal, and may read out the address and the data of the first group. In response, the external device may change a response signal from high to low. The interfacing apparatus 900 may receive a falling edge 1152 of the response signal, and reset the first group in which the address and the data are transmitted. When the first group is reset, the communication unit 940 may change the request signal from low to high. Also, the external device may receive a rising edge 1153 of the request signal, and change the response signal from low to high.

After a rising edge 1154 of the response signal is received, the arbiter may select the second group. When an address and data of the second group are loaded, the communication unit 940 may change the request signal from high to low. The external device that is communicating with the communication unit 940 may receive a falling edge 1161 of the request signal, and read out the address and the data of the second group. In response, the external device may change the response signal from high to low. The interfacing apparatus 900 may receive a falling edge 1162 of the response signal, and reset the second group of which the address and the data are transmitted. In response, the communication unit 940 may change the request signal from low to high. The external device may receive a rising edge 1163 of the request signal, and change the response signal from low to high. The interfacing apparatus 900 may receive a rising edge 1164 of the response signal, and iteratively perform the foregoing operation to transmit an address and data of a subsequent group in which an event occurs.

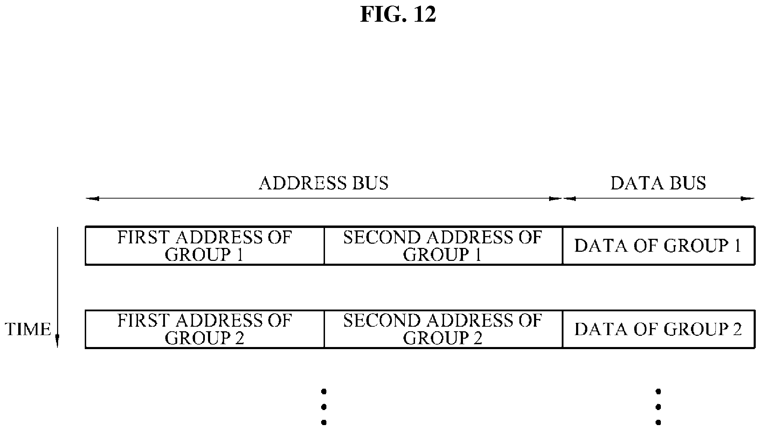

Information applied to the address bus and the data bus may change over time, as shown in FIG. 12. In this example, the address bus may have a bandwidth that is capable of transmitting the first address and the second address of the group in which an event occurs, while the data bus may have a bandwidth that is capable of transmitting the data of the group in which an event occurs.

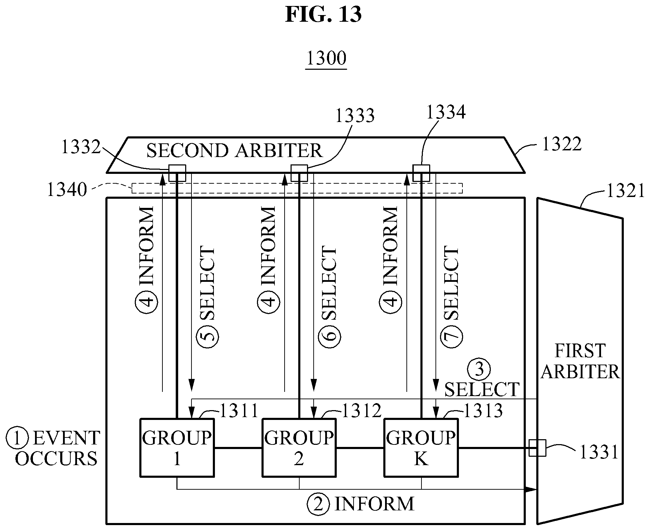

FIGS. 13 through 14 illustrate operations of an interfacing apparatus 1300.

Referring to FIG. 13, the interfacing apparatus 1300 includes a first arbiter 1321 and a second arbiter 1322. The interfacing apparatus 1300 further includes a first grouping unit 1331 for a first direction of a first group 1311, a first direction of a second group 1312, and a first direction of a k-th group 1313. The interfacing apparatus 1300 further includes a grouping unit 1332 for a second direction of the first group 1311, a grouping unit 1333 for a second direction of the second group 1312, and a grouping unit 1334 for a second direction of the k-th group 1313. In this example, the first directions may be horizontal directions, and the second directions may be vertical directions. An example of the interfacing apparatus 1300 may correspond to the example apparatus as shown in FIG. 4C.

Events may occur simultaneously in a plurality of groups classified in an identical row. For example, an occurrence of events may be sensed simultaneously in at least one element that is included in the first group 1311, at least one element included in the second group 1312, and at least one element included in the k-th group 1313.

Each of these events may generate event signals. The grouping unit 1331 for the first direction of the first group 1311, the first direction of the second group 1312, and the first direction of the k-the group 1313 may receive the event signals from the element in which the respective event occurs, and generate a first group event signal corresponding to a row common to the first group 1311, the second group 1312, and the k-th group 1313. The first group event signal may be a signal informing of an occurrence of an event in the row common to the first group 1311, the second group 1312, and the k-th group 1313.

The first arbiter 1321 may receive the first group event signal. The first arbiter 1321 may select the first group event signal, and output a first address common to the first group 1311, the second group 1312, and the k-th group 1313 based on the selected first group event signal. In this example, the first address may be an address corresponding to a y-coordinate that is common to the first group 1311, the second group 1312, and the k-th group 1313.

For example, the grouping unit 1332 for the second direction of the first group 1311 may receive the event signal from the element in which an event occurs in the first group 1311, and the grouping unit 1332 may generate a second group event signal corresponding to the first group 1311. The second group event signal may be a signal informing of an occurrence of an event in the first group 1311 in the second direction. The second group event signal may be transmitted to the second arbiter 1322, for example, after a selection signal is received from the first arbiter 1321.

For example, the grouping unit 1333 for the second direction of the second group 1312 may receive the event signal from the element in which an event occurs in the second group 1312, and the grouping unit 1333 may generate a third group event signal corresponding to the second group 1312. The third group event signal may be a signal informing of an occurrence of an event in the second group 1312 in the second direction. Also, the third group event signal may be transmitted to the second arbiter 1322, for example, after a selection signal is received from the first arbiter 1321.

For example, the grouping unit 1334 for the second direction of the k-th group 1313 may receive the event signal from the element in which an event occurs in the k-th group 1313, and the grouping unit 1334 may generate a fourth group event signal corresponding to the k-th group 1313. The fourth group event signal may be a signal informing of an occurrence of an event in the k-th group 1313 in the second direction. The fourth group event signal may be transmitted to the second arbiter 1322 after a selection signal is received from the first arbiter 1321.

The second arbiter 1322 may receive the second group event signal, the third group event signal, and the fourth group event signal. When a plurality of group event signals are received, the second arbiter 1322 may iteratively select a group event signal. For example, the second arbiter 1322 may sequentially select the second group event signal, the third group event signal, and the fourth group event signal. For example, the second arbiter 1322 may select the second group event signal, the third group event signal, and the fourth group event signal in a random sequence. It should also be appreciated that the example method of iteratively selecting a group event signal by the second arbiter 1322 may be variously modified. Hereinafter, an example in which the second group event signal, the third group event signal, and the fourth group event signal are sequentially selected by the second arbiter 1322 is described.

The second arbiter 1322 may select the second group event signal, and output a second address of the first group 1311 based on the selected second group event signal. For example, the second address of the first group 1311 may be an address corresponding to an x-coordinate of the first group 1311. The data output unit 1340 may also output data of the first group 1311.

The second arbiter 1322 may select the third group event signal, and output a second address of the second group 1312 based on the selected third group event signal. For example, the second address of the second group 1312 may be an address corresponding to an x-coordinate of the second group 1312. The data output unit 1340 may also output data of the second group 1312.

The second arbiter 1322 may select the fourth group event signal, and output a second address of the k-th group 1313 based on the selected fourth group event signal. For example, the second address of the k-th group 1313 may be an address corresponding to an x-coordinate of the k-th group 1313. The data output unit 1340 may also output data of the k-th group 1313.

The second arbiter 1322 may reset the first group 1311, the second group 1312, and the k-th group 1313. In an example, the second arbiter 1322 may reset the first group 1311 after the second address of the first group 1311 is successfully transmitted. The second arbiter 1322 may reset the second group 1312 after the second address of the second group 1312 is successfully transmitted. Also, the second arbiter 1322 may reset the k-th group 1313 after the second address of the k-th group 1313 is successfully transmitted. For example, the second arbiter 1322 may reset the first group 1311, the second group 1312, and the k-th group 1313 together after the second address of the k-th group 1313 is successfully transmitted.

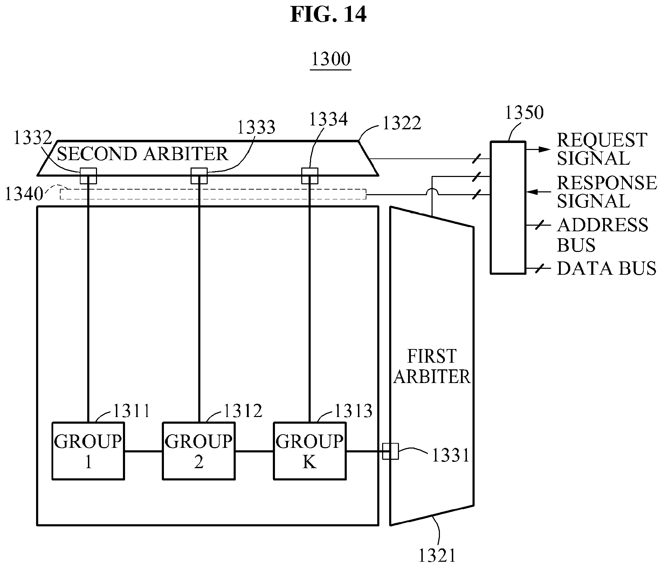

Referring to FIG. 14, the interfacing apparatus 1300 further includes a communicator 1350 that may communicate with an external device. For example, the communicator 1350 may communicate with the external device using handshaking. The external device may be a device that receives an event signal from the interfacing apparatus 1300, and may include, for example, a microprocessor, a hardware module configured to process an event signal, and the like.

When the first address corresponding to the row that is common to the first group 1311, the second group 1312, and the k-th group 1313 is output by the first arbiter 1321, the communicator 1350 may apply the first address to an address bus. The communicator 1350 may transmit the first address to the external device using handshaking.

When the second address of the first group 1311 is output by the second arbiter 1322, the communicator 1350 may apply the second address of the first group 1311 to the address bus. When the data of the first group 1311 is output by the data output unit 1340, the communicator 1350 may apply the data of the first group 1311 to a data bus. The communicator 1350 may transmit the second address and the data of the first group 1311 to the external device using handshaking.

When the second address of the second group 1312 is output by the second arbiter 1322, the communicator 1350 may apply the second address of the second group 1312 to the address bus. When the data of the second group 1312 is output by the data output unit 1340, the communicator 1350 may apply the data of the second group 1312 to the data bus. The communicator 1350 may transmit the second address and the data of the second group 1312 to the external device using handshaking.

When the second address of the k-th group 1313 is output by the second arbiter 1322, the communicator 1350 may apply the second address of the k-th group 1313 to the address bus. When the data of the k-th group 1313 is output by the data output unit 1340, the communicator 1350 may apply the data of the k-th group 1313 to the data bus. The communicator 1350 may transmit the second address and the data of the k-th group 1313 to the external device using handshaking.

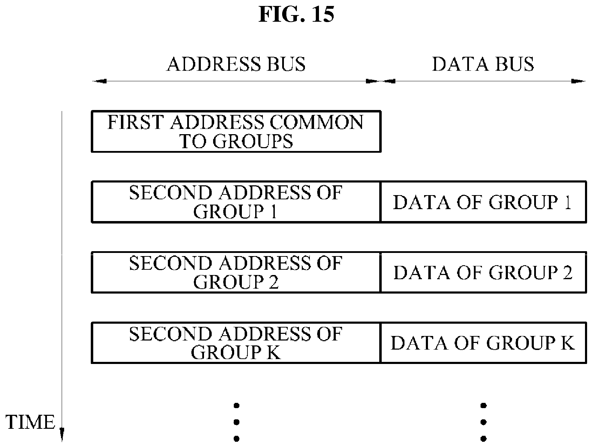

FIG. 15 illustrates information applied to an address bus and a data bus that may change over time;

Information applied to the address bus and the data bus may change over time, as shown in FIG. 15. In this example, the address bus may transmit a first address and a second address, separately, and thus, the address but may have a reduced bandwidth in comparison to the address bus of FIG. 12.

As described herein, one or more examples provide a technology that may simultaneously processes a plurality of groups having the same first address or line address. Accordingly, a line address arbitration time occurring while processing each group may be shared among a plurality of groups that are disposed on the same line in the group. In addition, a group reset time occurring when processing each group may be shared among a plurality of groups disposed on the same line in the group.

The communicator 1350 may further output timestamp information when applying a first address, a second address, and data of a group in which an event occurs to the address bus and the data bus. The communication unit 1350 may further receive an output of a timer. The communication unit 1350 may apply an output of the timer at a point in time at which an event occurs to a timestamp bus. The communication unit 1350 may apply, to the timestamp bus, an output of the timer at a point in time at which the first address, the second address, and data of the group in which an event occurs are applied to the address bus and the data bus.

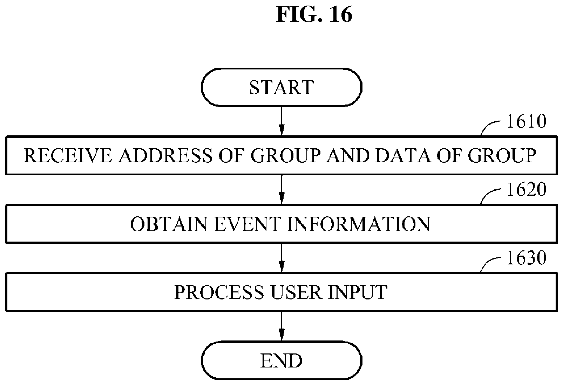

FIG. 16 illustrates a user input processing method according to an example.

Referring to FIG. 16, the user input processing method includes operation 1610 of receiving an address and data of a group in which an event occurs in response to a user input. Also, operation 1620 of obtaining event information based on the address, the data, and grouping information of the group, and operation 1630 of processing the user input based on the event information.

The group may include event generation elements disposed consecutively in a predetermined pattern. The address of the group may be an address representing the event generation elements that belong to the group. The grouping information may include dimension information of the group, and information on mapping between a plurality of bits including in the data of the group and the event generation elements of the group.

For example, 1610 may include receiving a request signal, reading out a first address of the group, reading out a second address of the group, reading out the data of the group, and transmitting a response signal. Operation 1610 may include receiving a first address common to a plurality of groups, and iteratively receiving items of data of the plurality of groups and second addresses that may be used to distinguish the plurality of groups.

The receiving of the first address may include receiving a first request signal, reading out the first address, and transmitting a first response signal. For example, the iteratively receiving may include receiving a second request signal, reading out a currently received second address from among the second addresses, reading out currently received data from among the items of data, and transmitting a second response signal.

The obtaining of the event information may include calculating reference coordinates corresponding to the address of the group, and calculating coordinates of at least one pixel in which an event occurs based on the reference coordinates, the data of the group, and the grouping information of the group.

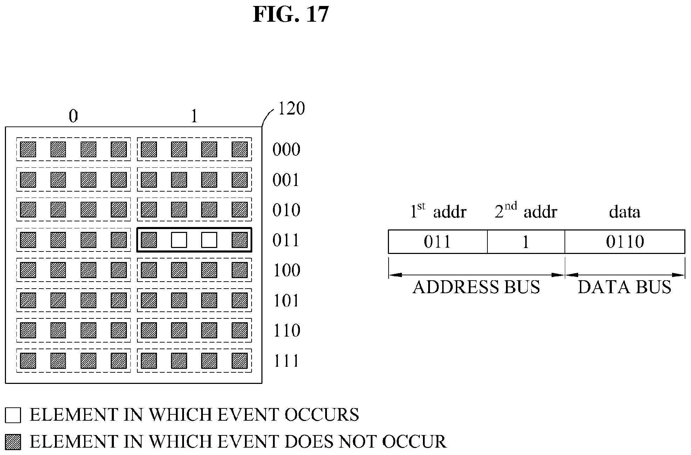

FIG. 17 is a diagram illustrating an address bus and a data bus, such as that shown in the example of FIG. 10A, which are used to identify a group of elements in which an event occurs such as shown in the example of FIG. 15.

Referring to FIG. 17, the 1^{st} address '011' is used to identify a row in which the grouped event is located, the 2^{nd} address '1' is used to identify which side (i.e. right side) of the row in which the group event is located, and the data '0110' identifies the elements in the combination of the row and the side in which the event occurs.

The examples may be applied to manufacture and control a high-capacity neuromorphic chip such as, for example, a high-resolution event-based sensor. For example, a maximum event occurrence rate in a 128 x 128 event-based sensor may be 2 mega events per second (Meps). When a resolution of the event-based sensor is increased to 640 x 480, the maximum event occurrence rate may increase to 20 Meps. When the event occurrence rate is increased to be greater than or equal to a threshold value, an event data obtaining rate may considerably decrease. One or more examples may resolve a decrease in an event data obtaining rate when there is an increase in a number of pixels such as dynamic-vision sensor (DVS) pixels in a high-resolution event-based sensor.

One or more examples provide a technology that obtains event data, for example, in a high-resolution event-based sensor without increasing a clock rate at which a circuit is to operate. As will be appreciated, when a clock rate of a circuit increases, power consumption may also increase. Accordingly, one or more examples provide an interface technology that increases an event data obtaining rate without increasing clock cycle and reducing power consumption.

One or more examples provide examples of a video interface that increase a bandwidth for event data by dividing a plurality of event generation elements, such as elements that detect light changing events, into groups, and simultaneously process the event signals generated in the groups. Thus, a processing delay and an event loss rate may decrease. In addition, one or more examples may reduce input-output (IO) power consumption. For example, one or more examples may reduce dynamic power consumption for IO.

One or more examples reduce a cycle of handshaking for data transmission. Thus, a limit to an event data obtaining rate may be increased.

One or more examples control a group size. The group size refers to a number of elements included in a single group of sensors such as display sensors, audios sensors, various processing sensors, and the like. For example, as the group size increases, an event processing rate may increase. As the group size increases, a size of an address bus may increase. When the size of the address bus increases, IO power consumption may also increase. Thus, when the group size increases, a trade-off between the event processing rate and the power consumption may occur. On or more examples may select a candidate group size with a smallest size of an address bus or a size below a threshold value from among candidate group sizes that are used to provide at least a desired event processing rate. In an example, a group size for a 640 x 480 event-based sensor may be set to "8".

One or more examples provide a technology that reduces a processing delay and an event loss rate by increasing a bandwidth while maintaining an advantage of event-driven acquisition within image sensors, photodiodes, and the like.

For example, one or more examples provide a technology that may simultaneously process events occurring in a group by dividing a number of elements into groups. Thus, the present disclosure may reduce a resolution in an aspect of acquisition of images.

In one or more examples, it may be possible to process multiple groups of events simultaneously through a single interface. For example, in one example the apparatus may simultaneously process multiple groups of elements through a single interface. In some examples, it may be better to use one large group instead of using multiple small groups.

According to one or more examples, provided is an apparatus similar to a related art event acquisition apparatus in that a group arbiter and a line arbiter may issue the same type of commands. One difference though is that instead of issuing a point on a line command, the line arbiter may issue a group ID command using what was previously a point on a line command. As another example, based on the group ID command, a group arbiter can acquire an entire group of elements at once instead of a single element at once. Thus, a group of elements can be processed simultaneously instead of processing only a single element.

In addition, one or more examples provide a technology that may simultaneously processes, during the same clock cycle, a plurality of groups of elements which have the same line address in one dimensional space, two dimensional space, three-dimensional space, and the like. Thus, by sharing an element reset time and a line address arbitration time occurring in the processing of each group among a plurality of groups on the same line, the overall processing rate may increase because there is less processing delay in comparison to when processing the elements in an individual basis. In addition, by initially processing a common line address and sequentially processing a group address of each group, a size of an address bus may decrease.

Although not limited hereto, in one or more examples, one-dimensional grouping may be easier to implement while a two-dimensional grouping may have better processing performance.

For example, when a plurality of events are generated by a plurality of audio elements, the interface may be configured to simultaneously receive, and the processor may be configured to simultaneously process, the plurality of audio events generated by the plurality of audio elements. As another example, when the plurality of events are generated by a plurality of video elements, and the interface is configured to receive, and the processor is configured to simultaneously process, the plurality of video events generated by the plurality of video elements.

The units described herein may be implemented using hardware components, software components, or a combination thereof. For example, a processing device may be implemented using one or more general-purpose or special purpose computers, such as, for example, a processor, a controller, an arithmetic logic unit, a digital signal processor, a microcomputer, a field programmable array, a programmable logic unit, a microprocessor, any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and data may be embodied permanently or semi-permanently in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more non-transitory computer readable recording mediums.

The method described herein may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes embodied herein, or they may be of the kind well-known and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The above-described devices may be configured to act as one or more software modules in order to perform the operations of the above-described examples, or vice versa.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents.

## Claims

1. An interfacing apparatus for an event sensor, said sensor comprising a plurality of event generation elements, the apparatus comprising:
a grouping unit configured to generate a plurality of groups of event generation elements, wherein the groups are arranged in a matrix having rows and columns and each goup comprises a plurality of event generation elements, said grouping unit comprising:
for each row of groups, a respective first grouping unit for generating a first group event signal by grouping first event signals corresponding to the event generation elements that are arranged in the groups in said row;
for each column of groups, a respective second grouping unit for generating a second group event signal by grouping second event signals corresponding to the event generation elements that are arranged in the groups in said column, each first event signal and second event signal being generated in response to detecting an event by a respective event generation element;
an interface configured to output an address and data of the group in which the event occurs, based on the generated first and second group event signals, wherein the interface comprises:
a first arbiter configured to select one of at least one first group event signal, in response to the at least one first group event signal; and
a second arbiter configured to select one of at least one second group event signal, in response to the at least one second group event signal corresponding to the selected first group event signal;
wherein the first arbiter is configured to output a first address corresponding to the row for which the selected first group event signal was generated, wherein the second arbiter is configured to output a second address corresponding to the column for which the selected second group event signal was generated, and wherein the interface further comprises a data output unit configured to output data of the event generation elements arranged in the group that corresponds to the first address and the second address, and wherein the event is to occur when a change of light is sensed for a pixel corresponding to an event generation element of the group.

2. The interfacing apparatus of claim 1, wherein the event generation elements are respectively configured to generate an event signal asynchronously in response to an occurrence of an event corresponding to a respective event generation element.

3. The interfacing apparatus of any of the previous claims,
wherein the interface is configured to further output a timestamp that corresponds to a time at which the event occurs.

4. The interfacing apparatus of any of the previous claims, wherein each of the event generation elements comprises at least one of:
a first state corresponding to an occurrence of an event; and
a second state distinct from the first state.

5. The interface apparatus of claim 4, wherein the event generation elements are configured to:
be initialized in the second state,
transition to the first state in response to the occurrence of the event, and
transition to the second state in response to a reset signal; and
wherein the event generation elements are configured to generate an event signal in the first state.

6. The interfacing apparatus of claim 5, wherein the interface further comprises a communicator configured to transmit a request signal to control an output of the first address, the second address, and the data, and receive a response signal that is configured to control a read-out of the first address, the second address, and the data, wherein the second arbiter is configured to apply a reset signal to event generation elements corresponding to the second address, in response to the response signal.

7. The interfacing apparatus of any of the previous claims, further comprising at least one of:
a vision sensor comprising the event generation elements; and
a processing device comprising the event generation elements.

8. A user input processing method using the interface apparatus as defined in any of the previous claims, comprising:
receiving the address of the group of event generation elements in which an event occurs and data of the group from the interface apparatus, in response to a user input;
obtaining event information based on the received address of the group, the data of the group, and grouping information of the group; and
processing the user input based on the obtained event information.

9. The user input processing method of claim 8, wherein the obtaining comprises:
calculating reference coordinates corresponding to the address of the group; and
calculating coordinates of at least one event generation element in which an event occurs based on the reference coordinates, the data of the group, and the grouping information of the group.

10. A non-transitory computer-readable medium having recorded thereon a computer program that when executed by a computer performs the method of any of the claims 8-9.

## Patentansprüche

1. Schnittstellenbildungsvorrichtung für einen Ereignissensor, wobei der Sensor eine Vielzahl von Ereigniserzeugungselementen umfasst, wobei die Vorrichtung Folgendes umfasst:
eine Gruppierungseinheit, die ausgelegt ist zum Erzeugen einer Vielzahl von Gruppen von Ereigniserzeugungselementen, wobei die Gruppen in einer Matrix mit Zeilen und Spalten angeordnet sind und jede Gruppe eine Vielzahl von Ereigniserzeugungselementen umfasst, wobei die Gruppierungseinheit Folgendes umfasst:
für jede Zeile von Gruppen eine jeweilige erste Gruppierungseinheit zum Erzeugen eines ersten Gruppen-Ereignissignals mittels Gruppieren erster Ereignissignale entsprechend den Ereigniserzeugungselementen, die in den Gruppen in dieser Zeile angeordnet sind;
für jede Spalte von Gruppen eine jeweilige zweite Gruppierungseinheit zum Erzeugen eines zweiten Gruppen-Ereignissignals mittels Gruppieren zweiter Ereignissignale entsprechend den Ereigniserzeugungselementen, die in den Gruppen in dieser Spalte angeordnet sind, wobei jedes erste Ereignissignal und zweite Ereignissignal als Reaktion auf die Erfassung eines Ereignisses durch ein jeweiliges Ereigniserzeugungselement erzeugt wird;
eine Schnittstelle, die ausgelegt ist zum Ausgeben einer Adresse und von Daten der Gruppe, in der das Ereignis auftritt, basierend auf den erzeugten ersten und zweiten Gruppenereignissignalen, wobei die Schnittstelle Folgendes umfasst:
einen ersten Arbiter, der ausgelegt ist zum Auswählen eines aus wenigstens einem ersten Gruppenereignissignal als Reaktion auf das wenigstens eine erste Gruppenereignissignal; und
einen zweiten Arbiter, der ausgelegt ist zum Auswählen eines aus wenigstens einem zweiten Gruppenereignissignal als Reaktion auf das wenigstens eine zweite Gruppenereignissignal, welches dem ausgewählten ersten Gruppenereignissignal entspricht;
wobei der erste Arbiter ausgelegt ist zum Ausgeben einer ersten Adresse, die der Zeile entspricht, für die das ausgewählte erste Gruppenereignissignal erzeugt wurde, wobei der zweite Arbiter ausgelegt ist zum Ausgeben einer zweiten Adresse, die der Spalte entspricht, für die das ausgewählte zweite Gruppenereignissignal erzeugt wurde, und wobei die Schnittstelle weiterhin eine Datenausgabeeinheit umfasst, die ausgelegt ist zum Ausgeben von Daten der Ereigniserzeugungselemente, die in der der ersten und der zweiten Adresse entsprechenden Gruppe angeordnet sind, und wobei das Ereignis auftreten soll, wenn eine Lichtveränderung erfasst wird für ein Pixel, das einem Ereigniserzeugungselement der Gruppe entspricht.

2. Schnittstellenbildungsvorrichtung nach Anspruch 1, wobei die Ereigniserzeugungselemente jeweils ausgelegt sind zum Erzeugen eines Ereignissignals auf asynchrone Weise als Reaktion auf ein Auftreten eines einem jeweiligen Ereigniserzeugungselement entsprechenden Ereignisses.

3. Schnittstellenbildungsvorrichtung nach einem der vorhergehenden Ansprüche, wobei die Schnittstelle ausgelegt ist zum weiteren Ausgeben eines Zeitstempels, der einem Zeitpunkt entspricht, an dem das Ereignis auftritt.

4. Schnittstellenbildungsvorrichtung nach einem der vorhergehenden Ansprüche, wobei jedes der Ereigniserzeugungselemente wenigstens eines der Folgenden umfasst:
einen ersten Status entsprechend einem Auftreten eines Ereignisses; und
einen sich von dem ersten Status unterscheidenden zweiten Status.

5. Schnittstellenbildungsvorrichtung nach Anspruch 4, wobei die Ereigniserzeugungselemente vorzugsweise zu Folgendem ausgelegt sind:
in dem zweiten Status initialisiert zu werden,
als Reaktion auf das Auftreten des Ereignisses in den ersten Status überzugehen, und
als Reaktion auf ein Reset-Signal in den zweiten Status überzugehen; und
wobei die Ereigniserzeugungselemente ausgelegt sind zum Erzeugen eines Ereignissignals in dem ersten Status.

6. Schnittstellenbildungsvorrichtung nach Anspruch 5, wobei die Schnittstelle weiterhin eine Kommunikationseinrichtung umfasst, die ausgelegt ist zum Übertragen eines Anforderungssignals zur Steuerung einer Ausgabe der ersten Adresse, der zweiten Adresse und der Daten, sowie zum Empfangen eines Antwortsignals, das ausgelegt ist zum Auslesen der ersten Adresse, der zweiten Adresse und der Daten, wobei der zweite Arbiter ausgelegt ist zum Anlegen eines Reset-Signals an Ereigniserzeugungselemente, die der zweiten Adresse entsprechen, als Reaktion auf das Antwortsignal.

7. Schnittstellenbildungsvorrichtung nach einem der vorhergehenden Ansprüche, die wenigstens eines der Folgenden umfasst:
einen Bildsensor, der die Ereigniserzeugungselemente umfasst; und
eine Verarbeitungsvorrichtung, die die Ereigniserzeugungselemente umfasst.

8. Benutzereingabeverarbeitungsverfahren unter Verwendung der Schnittstellenbildungsvorrichtung nach einem der vorhergehenden Ansprüche, wobei das Verfahren Folgendes umfasst:
Empfangen der Adresse der Gruppe von Ereigniserzeugungselementen, in denen ein Ereignis auftritt, und von Daten der Gruppe aus der Schnittstellenbildungsvorrichtung, als Reaktion auf eine Benutzereingabe;
Erhalten von Ereignisinformationen basierend auf der empfangenen Adresse der Gruppe, der Daten der Gruppe und von Gruppierungsinformationen der Gruppe; und
Verarbeiten der Benutzereingabe basierend auf den erhaltenen Ereignisinformationen.

9. Benutzereingabeverarbeitungsverfahren nach Anspruch 8, wobei das Erhalten Folgendes umfasst:
Berechnen von Referenzkoordinaten entsprechend der Adresse der Gruppe; und
Berechnen von Koordinaten wenigstens eines Ereigniserzeugungselements, in dem ein Ereignis auftritt, basierend auf den Referenzkoordinaten, den Daten der Gruppe und den Gruppierungsinformationen der Gruppe.

10. Nicht flüchtiges, computerlesbares Speichermedium, auf dem ein Computerprogramm gespeichert ist, welches, wenn es von einem Computer ausgeführt wird, das Verfahren nach einem der Ansprüche 8 und 9 ausführt.

## Revendications

1. Dispositif d'interfaçage pour un détecteur d'événement, ledit détecteur comprenant une pluralité d'éléments de génération d'événement, le dispositif comprenant :
une unité de groupement conçue pour générer une pluralité de groupes d'éléments de génération d'événement, lesdits groupes étant agencés selon une matrice présentant des rangées et des colonnes, chaque groupe comprenant une pluralité d'éléments de génération d'événement, ladite unité de groupement comprenant :
pour chaque rangée de groupes, une première unité de groupement respective destinée à générer un premier signal d'événement de groupe en regroupant des premiers signaux d'événement correspondant aux éléments de génération d'événement qui sont agencés dans lesdits groupes de ladite rangée ;
pour chaque colonne de groupes, une deuxième unité de groupement respective destinée à générer un deuxième signal d'événement de groupe en regroupant des deuxièmes signaux d'événement correspondant aux éléments de génération d'événement qui sont agencés dans lesdits groupes de ladite colonne, chacun des premiers signaux d'événement et des deuxièmes signaux d'événement étant généré suite à la détection d'un événement par un élément de génération d'événement respectif ;
une interface conçue pour fournir en sortie une adresse et des données du groupe dans lequel survient l'événement, compte tenu des premiers et deuxièmes signaux d'événement de groupe générés, ladite interface comprenant :
un premier arbitre conçu pour choisir un signal parmi au moins un premier signal d'événement de groupe, en réaction à l'au moins un premier signal d'événement de groupe, et
un deuxième arbitre conçu pour choisir un signal parmi au moins un deuxième signal d'événement de groupe, en réaction à l'au moins un deuxième signal d'événement de groupe correspondant au premier signal d'événement de groupe choisi ;
ledit premier arbitre étant conçu pour fournir en sortie une première adresse correspondant à la rangée pour laquelle le premier signal d'événement de groupe choisi a été généré, ledit deuxième arbitre étant conçu pour fournir en sortie une deuxième adresse correspondant à la colonne pour laquelle le deuxième signal d'événement de groupe choisi a été généré, et ladite interface comprenant en outre une unité de fourniture de données conçue pour fournir en sortie des données des éléments de génération d'événement agencés dans le groupe qui correspond à la première adresse et à la deuxième adresse, et ledit événement devant survenir lorsqu'un changement de lumière est détecté pour un pixel correspondant à un élément de génération d'événement du groupe.

2. Dispositif d'interfaçage selon la revendication 1, dans lequel les éléments de génération d'événement sont conçus respectivement pour générer un signal d'événement de façon asynchrone suite à la survenue d'un événement correspondant à un élément de génération d'événement respectif.

3. Dispositif d'interfaçage selon l'une quelconque des revendications précédentes, dans lequel l'interface est conçue pour fournir en outre en sortie une estampille temporelle qui correspond au moment auquel survient l'événement.

4. Dispositif d'interfaçage selon l'une quelconque des revendications précédentes, dans lequel chacun des éléments de génération d'événement comprend :
un premier état correspondant à la survenue d'un événement, et/ou
un deuxième état distinct du premier état.

5. Dispositif d'interfaçage selon la revendication 4, dans lequel les éléments de génération d'événement sont de préférence conçus pour :
être initialisés dans le deuxième état,
passer au premier état suite à la survenue de l'événement, et
passer au deuxième état en réaction à un signal de réinitialisation ; et dans lequel
les éléments de génération d'événement sont conçus pour générer un signal d'événement dans le premier état.

6. Dispositif d'interfaçage selon la revendication 5, dans lequel l'interface comprend en outre un organe de communication conçu pour transmettre un signal de demande visant à commander la fourniture en sortie de la première adresse, de la deuxième adresse et des données, et pour recevoir un signal de réponse conçu pour commander la lecture de la première adresse, de la deuxième adresse et des données, ledit deuxième arbitre étant conçu pour appliquer un signal de réinitialisation aux éléments de génération d'événement correspondant à la deuxième adresse, en réaction au signal de réponse.

7. Dispositif d'interfaçage selon l'une quelconque des revendications précédentes, comprenant en outre :
un capteur visuel comprenant les éléments de génération d'événement, et/ou
un dispositif de traitement comprenant les éléments de génération d'événement.

8. Procédé de traitement d'entrée utilisateur au moyen du dispositif d'interfaçage défini dans l'une quelconque des revendications précédentes, comprenant :
la réception de l'adresse du groupe d'éléments de génération d'événement dans lesquels survient un événement et des données du groupe en provenance du dispositif d'interfaçage, en réaction à une entrée utilisateur,
l'obtention d'informations d'événement compte tenu de l'adresse du groupe reçue, des données du groupe, et d'informations de groupement du groupe, et
le traitement de l'entrée utilisateur compte tenu des informations d'événement obtenues.

9. Procédé de traitement d'entrée utilisateur selon la revendication 8, dans lequel l'obtention comprend :
le calcul de coordonnées de référence correspondant à l'adresse du groupe, et
le calcul de coordonnées d'au moins un élément de génération d'événement dans lequel survient un événement compte tenu des coordonnées de référence, des données du groupe, et des informations de groupement du groupe.

10. Support non transitoire lisible par ordinateur sur lequel est enregistré un programme informatique qui, lorsqu'il est exécuté par un ordinateur, exécute le procédé selon l'une quelconque des revendications 8 et 9.
